# EUROPÄISCHE PATENTSCHRIFT

(11) **EP 1 294 734 B1**
(45) Veröffentlichungstag und Bekanntmachung des Hinweises auf die Patenterteilung: **19.05.2004**
(21) Anmeldenummer: 01965046.4
(22) Anmeldetag: 28.06.2001
(51) Int. Cl.: C07F 17/00, C07B 31/00, C08F 4/00

(54) **VERFAHREN ZUR SELEKTIVEN HERSTELLUNG RACEMISCHER METALLOCENKOMPLEXE**
METHOD FOR THE SELECTIVE PRODUCTION OF RACEMIC METALLOCENE COMPLEXES
PROCEDE DE PREPARATION SELECTIVE DE COMPLEXES METALLOCENE RACEMIQUES

(30) Priorität: 29.06.2000 DE 10030638
(43) Veröffentlichungstag der Anmeldung: 26.03.2003
(73) Patentinhaber: Basell Polyolefine GmbH, 50389 Wesseling (DE)
(72) Erfinder: DAMRAU, Robert, 78462 Konstanz (DE); MÜLLER, Patrik, 67663 Kaiserslautern (DE); ROYO, Eva, 50018 Zaragoza (ES); BRINTZINGER, Hans-Herbert, 8274 Tägerwilen (CH)
(74) Vertreter: Seelert, Stefan, Dr.
(86) Internationale Anmeldenummer: PCT/EP2001/007389
(87) Internationale Veröffentlichungsnummer: WO 2002/000672

(56) Entgegenhaltungen:
- EP-A- 0 970 964
- WO-A-92/09545
- WO-A-95/02567
- ENGELHARDT, LUTZ M. ET AL: "Axially asymmetric metal alkyls. Part 5. Synthesis and reduction to zirconium(III) species of Group 4 metallepines [ML(.eta.-C5H5)2] [L = (2-CHRC6H4)22-, R = H, M = Ti, Zr, or Hf], isomers of [ZrL(.eta.-C5H5)2] (R = SiMe3), and meso-[M[1,8- (CHSiMe3)2C10H6](.eta.-C5H5)2] (M = Zr or Hf);x-ray crystal" J. CHEM. SOC., DALTON TRANS., Nr. 10, 1987, Seiten 2347-2357, XP001024875
- HUTTENLOCH, MONIKA E. ET AL: "ansa-Metallocene derivatives. XXXIX. Biphenyl-bridged metallocene complexes of titanium, zirconium, and vanadium: syntheses, crystal structures and enantioseparation" J. ORGANOMET. CHEM., Bd. 541, Nr. 1-2, 1997, Seiten 219-232, XP004093720
- SCHMIDT ET AL: "photochemical isomerization of me2si-bridged zirconocene complexes. application to stereoselective synthesis of ansa-zirconocene binaphtholate stereoisomers" ORGANOMETALLICS, WASHINGTON, DC, US, Bd. 16, Nr. 8, 15. April 1997 (1997-04-15), Seiten 1724-1728, XP002089634 ISSN: 0276-7333
- WILLOUGHBY, CHRISTOPHER A. ET AL: "Catalytic Asymmetric Hydrogenation of Imines with a Chiral Titanocene Catalyst: Kinetic and Mechanistic Investigations" J. AM. CHEM. SOC., Bd. 116, Nr. 26, 1994, Seiten 11703-11714, XP001030671
- HERON, NICOLA M. ET AL: "Stereoselective Heteroatom-Assisted Allylic Alkylation of Cyclic Allylic Ethers with Grignard Reagents. A Convenient Route to Enantiomerically Pure Carbocycles" J. AM. CHEM. SOC. (1997), 119(26), 6205-6206 , Bd. 119, Nr. 26, 1997, Seiten 6205-6206, XP001032921
- XU, ZHONGMIN ET AL: "Applications of Zr-Catalyzed Carbo-Magnesation and Mo-Catalyzed Macrocyclic Ring Closing Metathesis in Asymmetric Synthesis. Enantioselective Total Synthesis of Sch 38516 (Fluvirucin B1)" J. AM. CHEM. SOC. (1997), 119(43), 10302-10316 , Bd. 119, Nr. 43, 1997, Seiten 10302-10316, XP001032951
- XIN, SHIXUAN ET AL: "Enantioselective hydrosilation of ketones in the presence of an S,S-[1,2-bis(tetrahydroindenyl)ethane]tita nium catalyst" CAN. J. CHEM., Bd. 73, Nr. 3, 1995, Seiten 999-1002, XP001030670

## Beschreibung

Die vorliegende Erfindung betrifft ein Verfahren zur Herstellung von racemischen Metallocenkomplexen durch Umsetzung von verbrückten oder nicht-verbrückten Übergangsmetallaromatkomplexen der allgemeinen Formel I 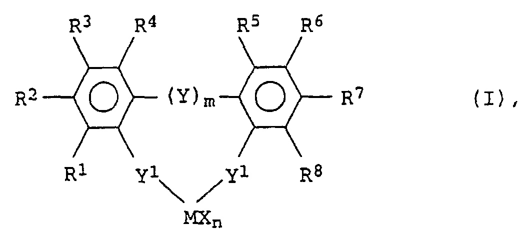 in der die Substituenten und Indizes folgende Bedeutung haben:
- M: Titan, Zirkonium, Hafnium, Vanadium, Niob, Tantal, Chrom, Molybdän, Wolfram, sowie Elemente der III. Nebengruppe des Periodensystems und der Lanthanoiden,
- X: gleich oder verschieden Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
- n: eine ganze Zahl zwischen 1 und 4, wobei n der Wertigkeit von M minus der Zahl 2 entspricht,
- R¹, R⁸: gleich oder verschieden Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, wobei die genannten Reste teilweise oder vollständig mit Heteroatomen substituiert sein können, -OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃-bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
- R² bis R⁷: gleich oder verschieden Wasserstoff, C₁- bis C₂₀-Alkyl, 3- bis 8-gliedriges Cycloalkyl - das seinerseits ein C₁- bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen, und die genannten Reste können vollständig oder teilweise mit Heteroatomen substituiert sein, -OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
- R¹⁰, R¹¹: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
- Y, Y¹: gleich oder verschieden 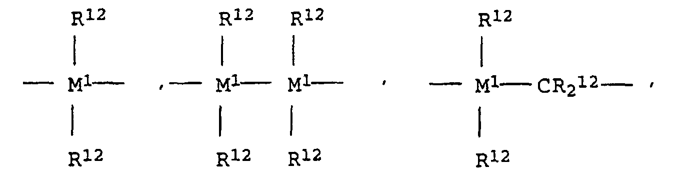 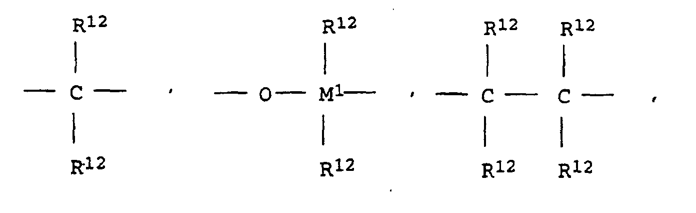 -B(R¹²)-, -Al(R¹²)-, -Ge-, -Sn-, -O-, -S-, -S(O)-, -S(O)₂-, -N(R¹²)-, -C(O)-,- P(R¹²)- oder -P(O)(R¹²)-,
wobei
- R¹²: gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
- M¹: Silicium, Germanium oder Zinn ist und
- m: 0, 1, 2, 3 bedeutet,
oder Y nicht-verbrückend ist und für zwei Reste R' und R" steht, wobei
- R' und R": gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können,
-OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
mit Cyclopentadienylderivaten von Alkali- oder Erdalkalimetallen, Erwärmen des so erhaltenen Reaktionsgemisches auf eine Temperatur im Bereich von -78 bis 250°C, gegebenenfalls unter Zusatz von Radikalen oder Radikalbildnern und gegebenenfalls anschließende Substitution des verbrückten phenolischen Liganden oder der beiden nicht verbrückten phenolischen Liganden zum Mono- oder Bisubstitutionsprodukt; racemische Metallocenkomplexe der allgemeinen Formel III 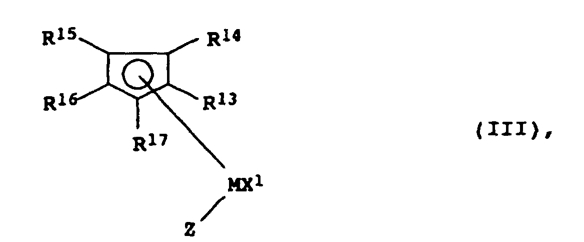 in der die Substituenten und Indizes folgende Bedeutung haben:
- M: Titan, Zirkonium, Hafnium, Vanadium, Niob, Tantal, Chrom, Molybdän, Wolfram, sowie Elemente der III. Nebengruppe des Periodensystems und der Lanthanoiden,
- X¹: 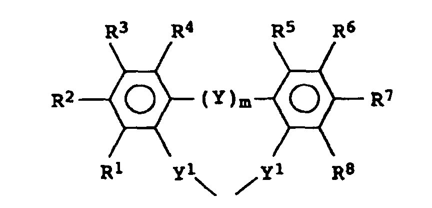
wobei:
- R¹, R⁸: gleich oder verschieden Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
wobei die genannten Reste teilweise oder vollständig mit Heteroatomen substituiert sein können, -OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
- R² bis R⁷: gleich oder verschieden Wasserstoff, C₁- bis C₂₀-Alkyl, 3- bis 8-gliedriges Cycloalkyl - das seinerseits ein C₁- bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen und die genannten Reste können vollständig oder teilweise mit Heteroatomen substituiert sein,
- OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
- Y, Y¹: gleich oder verschieden 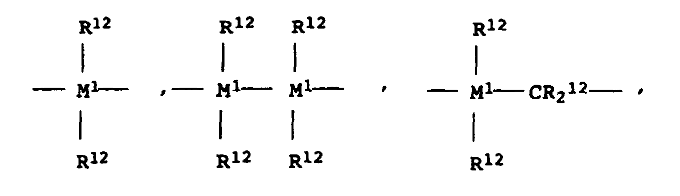 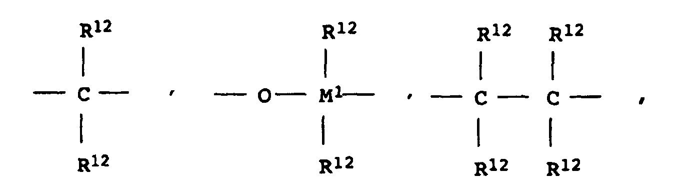 -B(R¹²)-, -Al(R¹²)-, -Ge-, -Sn-, -O-, -S-, -S(O)-, -S(O)₂-, -N(R¹²)-, -C(O)-,- P(R¹²)- oder -P(O)(R¹²)-,
wobei
- R¹²: gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
- M¹: Silicium, Germanium oder Zinn ist und
- m: 0, 1, 2, 3 bedeutet,
oder Y nicht-verbrückend ist und für zwei Reste R' und R" steht, wobei
- R' und R": gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können, -OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
- R¹³ bis R¹⁷: gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl, wobei benachbarte Reste gemeinsam für 4 bis 15 C-Atome aufweisende cyclische Gruppen stehen können, oder Si(R¹⁸)₃ mit
- R¹⁸: gleich oder verschieden C₁- bis C₁₀-Alkyl, C₆- bis C₁₅-Aryl oder C₃- bis C₁₀-Cycloalkyl,
- Z: für 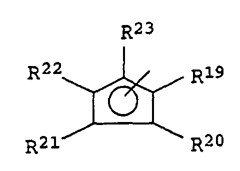 steht,
wobei die Reste
- R¹⁹ bis R²³: gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl bedeuten, wobei benachbarte Reste gemeinsam für 4 bis 15 C-Atome aufweisende cyclische Gruppen stehen können, oder Si(R²⁴)₃ mit
- R²⁴: gleich oder verschieden C₁- bis C₁₀-Alkyl, C₆- bis C₁₅-Aryl oder C₃- bis C₁₀-Cycloalkyl,
oder wobei die Reste
- R¹⁶ und Z: gemeinsam eine Gruppierung -[T(R²⁵)(R²⁶)]_{q}-E- bilden, in der
- T: gleich oder verschieden sein kann und für Silicium, Germanium, Zinn oder Kohlenstoff steht,
- R²⁵, R²⁶: für Wasserstoff, C₁- bis C₁₀-Alkyl, C₃- bis C₁₀-Cycloalkyl oder C₆- bis C₁₅-Aryl
- q: für die Zahlen 1, 2, 3 oder 4,
- E: für 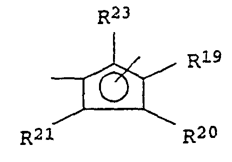 oder A steht, wobei A ―O―, ―S―, 〉NR²⁷ oder 〉PR²⁷ bedeutet,
- mit R²⁷: gleich oder verschieden C₁- bis C₁₀-Alkyl, C₆- bis C₁₅-Aryl, C₃- bis C₁₀-Cycloalkyl, Alkylaryl oder Si(R²⁸)₃
- mit R²⁸: gleich oder verschieden C₁- bis C₁₀-Alkyl, C₆- bis C₁₅-Aryl, C₃- bis C₁₀-Cycloalkyl oder Alkylaryl
und die Verwendung von racemischen Metallocenkomplexen gemäß Formel III als Katalysatoren oder als Bestandteil von Katalysatoren für die Polymerisation von olefinisch ungesättigten Verbindungen oder als Reagentien oder als Katalysatoren in der Stereoselektivensynthese.

Neben der stereospezifischen Olefinpolymerisation bietet in zunehmendem Maße die enantioselektive organische Synthese interessante Anwendungsmöglichkeiten für chirale Metallocenkomplexe von Metallen der III. - VI. Nebengruppe des Periodensystems der Elemente. Beispielhaft seien hier enantioselektive Hydrierungen prochiraler Substrate genannt, beispielsweise prochiraler Olefine, wie in R. Waymouth, P. Pino, J. Am. Chem. Soc. 112 (1990), S. 4911-4914 beschrieben, oder prochiraler Ketone, Imine und Oxime, wie in der WO 92/09545 beschrieben.

In J. Chem Soc., Dalton Trans., Nr. 10, 1987, 2347-2357 werden axiale asymmetrische Metallacyclen offenbart.

In J. Organomet. Chem., Bd. 541, Nr. 1-2, 1997, 219-232 werden verbrückte ansa-Metallocenkomplexe beschrieben, wobei die Cyclopentadienylringe über ein Biphenylengerüst verknüpft sind.

In Organometallics, Bd. 16, Nr. 8, 1997, 1724-1728, in J. Am. Chem. Soc., 116,1994, 11703-11714, in Can. J. Chem., Bd. 73, Nr. 3, 1995, 999-1002 und in WO 92 09545 werden ansa-Zirkonocen-Binaphtholatkomplexe offenbart.

In EP-A-0 970 964 werden Monocyclopentadienylkomplexe des Titans beschrieben, in denen der Cyclopentadienylligand mit einem Phenoxyliganden verknüpft ist.

Weiterhin seien genannt die Herstellung optisch aktiver Alkene durch enantioselektive Oligomerisation, wie in W. Kaminsky et al., Angew. Chem. 101 (1989), S. 1304-1306 beschrieben, sowie die enantioselektive Cyclopolymerisation von 1,5-Hexadienen, wie in R. Waymouth, G. Coates, J. Am. Chem. Soc. 113 (1991), S. 6270 - 6271 beschrieben.

Die genannten Anwendungen erfordern im allgemeinen den Einsatz eines Metallocenkomplexes in seiner racemischen Form, d.h. ohne meso-Verbindungen. Von dem bei der Metallocensynthese des Standes der Technik anfallenden Diastereomerengemisch (rac.- u. meso-Form) muß zunächst die meso-Form abgetrennt werden. Da die meso-Form verworfen werden muß, ist die Ausbeute an racemischem Metallocenkomplex gering.

Aufgabe der vorliegenden Erfindung war es daher, ein Verfahren zur selektiven Herstellung von racemischen, praktisch (NMR-Meßgenauigkeit) meso-Isomer-freien Metallocenkomplexen zu finden.

Eine weitere Aufgabe war es, racemische Metallocenkomplexe zu finden, welche entweder direkt als oder in Katalysatoren, vornehmlich für die Olefinpolymerisation, verwendet werden können, oder die nach Modifizierung, beispielsweise nach der Substitution eines "Hilfsliganden", als, oder in Katalysatoren, vornehmlich für die Olefinpolymerisation, verwendet werden können, oder die als Reagenzien oder Katalysatoren in der stereoselektiven Synthese verwendet werden können.

Demgemäß wurde das in den Patentansprüchen definierte Verfahren, die racemischen Metallocenkomplexe III, sowie deren Verwendung als Katalysatoren oder in Katalysatoren für die Polymerisation von olefinisch ungesättigten Verbindungen oder als Reagenzien oder Katalysatoren in der stereoselektiven Synthese gefunden.

Die Begriffe "meso-Form", "Racemat" und somit auch "Enantiomere" in Verbindung mit Metallocenkomplexen sind bekannt und beispielsweise in Rheingold et al., Organometallics 11 (1992), S. 1869 - 1876 definiert.

Der Begriff "praktisch meso-frei" wird hier so verstanden, daß mindestens 90 % einer Verbindung in Form des Racemats vorliegen. Die im erfindungsgemäßen Verfahren eingesetzten, verbrückten oder unverbrückten Übergangsmetallaromatkomplexe haben die allgemeine Formel I 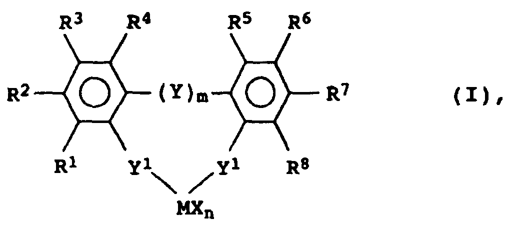 in der die Substituenten und Indizes folgende Bedeutung haben:
- M: Titan, Zirkonium, Hafnium, Vanadium, Niob, Tantal, Chrom, Molybdän, Wolfram, sowie Elemente der III. Nebengruppe des Periodensystems und der Lanthanoiden,
- X: gleich oder verschieden Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
- n: eine ganze Zahl zwischen 1 und 4, wobei n der Wertigkeit von M minus der Zahl 2 entspricht,
- R¹, R⁸: gleich oder verschieden, Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, wobei die genannten Reste teilweise oder vollständig mit Heteroatomen substituiert sein können, - OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
- R² bis R⁷: gleich oder verschieden Wasserstoff, C₁- bis C₂₀-Alkyl, 3- bis 8-gliedriges Cycloalkyl - das seinerseits ein C₁- bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen und die genannten Reste können vollständig oder teilweise mit Heteroatomen substituiert sein, - OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
- R¹⁰, R¹¹: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
- Y, Y¹: gleich oder verschieden 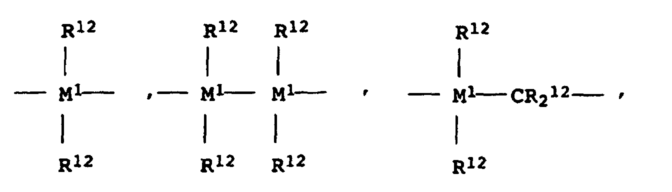 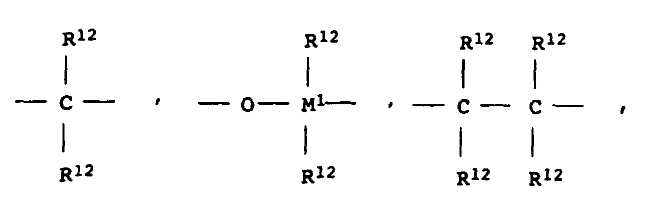 -B(R¹²)-, -Al(R¹²)-, -Ge-, -Sn-, -O-, -S-, -S(O)-, -S(O)₂-, -N(R¹²)-, -C(O)-,- P(R¹²)- oder -P(O)(R¹²)-,
wobei
- R¹²: gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
- M¹: Silicium, Germanium oder Zinn ist und
- m: 0, 1, 2, 3 bedeutet, oder Y nicht-verbrückend ist und für zwei Reste R' und R" steht, wobei
- R' und R": gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können.
-OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl

Bevorzugte Metalle M sind Titan, Zirkonium und Hafnium, insbesondere Zirkonium.

Gut geeignete Substituenten X sind Fluor, Chlor, Brom, Iod, vorzugsweise Chlor, weiterhin C₁- bis C₆-Alkyl, wie Methyl, Ethyl, n-Propyl, iso-Propyl, n-Butyl, sec.-Butyl, i-Butyl, vorzugsweise tert.-Butyl. Außerdem gut geeignet als Substituenten X sind Alkoholate -OR¹⁰ oder Amide -NR¹⁰R¹¹ mit R¹⁰ oder R¹¹ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest. Derartige Reste X sind beispielsweise Methyl, Ethyl, i-Propyl, tert.-Butyl, Phenyl, Naphthyl, p-Tolyl, Benzyl, Trifluormethyl, Pentafluorphenyl.

Die Substituenten R¹ und R⁸ sind gleich oder verschieden und bedeuten Wasserstoff, Fluor, Chlor, Brom, Iod, C₁- bis C₂₀-Alkyl,-OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl, 3- bis 8-gliedriges Cycloalkyl - das seinerseits ein C₁- bis C₁₀-Alkylrest, wie Methyl, Ethyl Propyl tragen kann. Beispiele für derartigen Cycloalkylreste sind Cyclopropyl, Cyclopentyl, vorzugsweise Cyclohexyl, Norbornyl. Weiterhin bedeuten die Substituenten R¹ und R⁸ C₆- bis C₁₅-Aryl, wie Phenyl, Naphthyl; Alkylaryl mit 1 bis 10 C-Atomen im Alkylrest und 6 bis 20 C-Atomen im Arylrest, wie p-Tolyl; Arylalkyl mit 1 bis 10 C-Atomen im Alkylrest und 6 bis 20 C-Atomen im Arylrest, wie Benzyl, Neophyl oder sie bedeuten Triorganosilyl wie Si(R⁹)₃ mit R⁹ gleich oder verschieden C₁- bis C₂₀-Alkyl, C₃- bis C₁₀-Cycloalkyl, C₆- bis C₁₅-Aryl, beispielsweise Trimetylsilyl, tert.-Butyldimethylsilyl, Triphenylsilyl. Die genannten Reste können selbstverständlich auch teilweise oder vollständig mit Heteroatomen substituiert sein, beispielsweise mit S-, N-, O-, oder Halogenatom-haltigen Strukturelementen. Exemplarisch seien für derartige substituierte Reste R¹ und R⁸ genannt die Trifluormethyl-, Pentafluorethyl-, Heptafluorpropyl-, Heptafluorisopropyl-, Pentafluorphenylgruppe.

Bevorzugte Substituenten R¹ und R⁸ sind solche, die viel Raum in Anspruch nehmen. Üblicherweise nennt man solche Substituenten sperrige Substituenten. Sie zeichnen sich dadurch aus, daß sie sterische Hinderung hervorrufen können.

Im allgemeinen versteht man unter diesen Gruppen kohlenstoffoder siliziumorganische Reste mit hohem Raumbedarf (sperrige Reste) , aber auch Fluor und vorzugsweise Chlor, Brom und Iod. Die Anzahl der Kohlenstoffatome die in derartigen kohlenstoff- oder siliziumorganischen Resten enthalten sind, liegt üblicherweise nicht unter drei.

Bevorzugte nicht-aromatische, sperrige Reste sind solche kohlenstoff- oder siliziumorganischen Reste, die in α-Stellung oder höherer Stellung verzweigt sind. Beispiele für derartige Reste sind verzweigte C₃- bis C₂₀-aliphatische, C₉- bis C₂₀-araliphatische Reste und C₃- bis C₁₀-cycloaliphatische Reste, wie iso-Propyl, tert.-Butyl, iso-Butyl, neo-Pentyl, 2-Methyl-2-phenylpropyl (Neophyl), Cyclohexyl, 1-Methylcyclohexyl, Bicyclo[2.2.1]-hept-2-yl (2-Norbornyl), Bicyclo[2.2.1]hept-1-yl (1-Norbornyl), Adamantyl. Weiterhin kommen als solche Reste siliziumorganische Reste mit drei bis dreißig Kohlenstoffatomen in Frage, beispielsweise Trimethylsilyl, Triethylsilyl, Triphenylsilyl, tert.-Butyldimethylsily, Tritolylsilyl oder Bis(trimethylsilyl)methyl.

Bevorzugte aromatische, sperrige Gruppen sind in der Regel C₆- bis C₂₀-Arylreste, wie Phenyl, 1- oder 2-Naphthtyl oder vorzugsweise C₁- bis C₁₀-alkyl- oder C₃- bis C₁₀-cycloalkylsubstituierte aromatische Reste wie 2,6-Dimethylphenyl, 2,6-Di-tert.-Butylphenyl, Mesityl.

Ganz besonders bevorzugte Substituenten R¹ und R⁸ sind i-Propyl, tert.-Butyl, Trimethylsilyl, Cyclohexyl, i-Butyl, Trifluormethyl, 3,5-Dimethylphenyl.

Im bevorzugten Substitutionsmuster sind R¹ und R⁸ in Formel I gleich.

Die Substituenten R² bis R⁷ sind gleich oder verschieden und bedeuten Wasserstoff, C₁- bis C₂₀-Alkyl,-OR²⁷, -SR²⁷, -N(R²⁷)₂, -P(R²⁷)₂, mit R²⁷, gleich oder verschieden, C₁- bis C₁₀-Alkyl, C₆bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl, 3- bis 8-gliedriges Cycloalkyl - das seinerseits ein C₁- bis C₁₀-Alkylrest, wie Methyl, Ethyl, Propyl tragen kann. Beispiele für derartigen Cycloalkylreste sind Cyclopropyl, Cyclopentyl, vorzugsweise Cyclohexyl, Norbornyl. Weiterhin bedeuten die Substituenten R² bis R⁷ C₆- bis C₁₅-Aryl, wie Phenyl, Naphthyl, Alkylaryl mit 1 bis 10 C-Atomen im Alkylrest und 6 bis 20 C-Atomen im Arylrest, wie p-Tolyl, Arylalkyl mit 1 bis 10 C-Atomen im Alkylrest und 6 bis 20 C-Atomen im Arylrest, wie Benzyl, Neophyl oder sie bedeuten Triorganosilyl wie Si(R⁹)₃ mit R⁹ gleich oder verschieden C₁- bis C₂₀-Alkyl, C₃- bis C₁₀-Cycloalkyl, C₆- bis C₁₅-Aryl, beispielsweise Trimetylsilyl, tert.-Butyldimethylsilyl, Triphenylsilyl. Die Reste R² bis R⁷ können aber auch derartig miteinander verbunden sein, daß benachbarte Reste für 4 bis 15 C-Atome aufweisende gesättigte, teilweise gesättigte oder ungesättigte cyclische Gruppen stehen. Vorzugsweise sind die Reste R³ und R⁴ und/oder die Reste R⁵ und R⁶ mit einer C₂-Brücke derartig verbunden, daß ein benzoanelliertes Ringsystem (Naphthylderivat) entsteht. Die genannten Reste R² bis R⁷ können selbstverständlich auch teilweise oder vollständig mit Heteroatomen substituiert sein, beispielsweise mit S-, N-, O-, oder Halogenatom-haltigen Strukturelementen. Exemplarisch seien für derartige substituierte Reste R² bis R⁷ genannt die Trifluormethyl-, Pentafluorethyl-, Heptafluorpropyl-, Heptafluorisopropyl-, Pentafluorphenylgruppe. Besonders bevorzugt sind die Reste R² und R⁷ gleich und bedeuten Wasserstoff und R³, R⁴, R⁵, R⁶ haben die bereits genannte Bedeutung.

Als Brückenglieder Y, Y¹ kommen die folgenden in Frage: 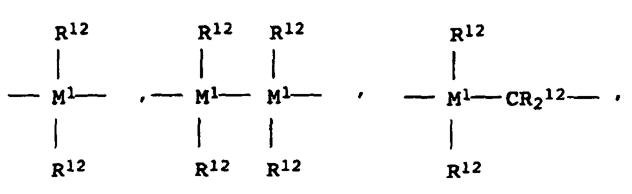 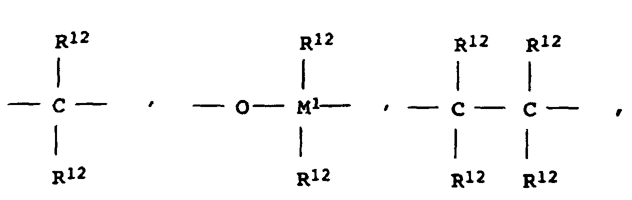 -B(R¹²)-, -Al(R¹²)-, -Ge-, -Sn-, -O-, -S-, -S(O)-, -S(O)₂-, -N(R¹²)-, -C(O)-,- P(R¹²)- oder -P(O)(R¹²)-,
wobei
- R¹²: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden,
- M¹: Silicium, Germanium oder Zinn ist.

Für das erfindungsgemäße Verfahren ist eine Ringstruktur in (I) (m ≠ 0) von Vorteil, und Ringgrößen mit m = 1 bis 3 sind bevorzugt.

Bevorzugte Brückenglieder Y, Y¹ sind Methylen -CH₂-, S, O, - C(CH₃)₂-, wobei m in Formel I vorzugsweise 1 oder 2 ist; Y¹ ist ganz besonders bevorzugt gleich und bedeutet Sauerstoff -O-. Bevorzugt sind auch Phenolattyp-Strukturen in welchen m in Formel I 0 ist, das heißt, daß die aromatischen Ringsysteme direkt miteinander verknüpft sind, vorzugsweiseweise zum Biphenolderivat.

Von den im erfindungsgemäßen Verfahren eingesetzten unverbrückten Übergangsmetallaromatkomplexen der allgemeinen Formel I sind diejenigen bevorzugt, in denen Y für Reste R' und R" steht, die gleich oder verschieden sind und Fluor, Chlor, Brom, Iod, -OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆bis C₁₅-Aryl, C₃- bis C₁₀-Cycloalkyl, Alkylaryl, C₁- bis C₂₀-Alkyl oder 3- bis 8-gliedriges Cycloalkyl - das seinerseits ein C₁- bis C₁₀-Alkylrest, wie Methyl, Ethyl, Propyl tragen kann - bedeuten. Beispiele für derartige Cycloalkylreste sind Cyclopropyl, Cyclopentyl, vorzugsweise Cyclohexyl, Norbornyl. Weiterhin bedeuten die Substituenten R' und R" C₆- bis C₁₅-Aryl, wie Phenyl, Naphthyl; Alkylaryl mit 1 bis 10 C-Atomen im Alkylrest und 6 bis 20 C-Atomen im Arylrest, wie p-Tolyl; Arylalkyl mit 1 bis 10 C-Atomen im Alkylrest und 6 bis 20 C-Atomen im Arylrest, wie Benzyl, Neophyl oder sie bedeuten Triorganosilyl wie Si(R⁹)₃ mit R⁹ gleich oder verschieden C₁- bis C₂₀-Alkyl, C₃- bis C₁₀-Cycloalkyl, C₆- bis C₁₅-Aryl, beispielsweise Trimetylsilyl, tert.-Butyldimethylsilyl, Triphenylsilyl. Die genannten Reste können selbstverständlich auch teilweise oder vollständig mit Beteroatomen substituiert sein, beispielsweise mit S-, N-, O-, oder Halogenatom-haltigen Strukturelementen. Exemplarisch seien für derartige substituierte Reste R' und R" genannt die Trifluormethyl-, Pentafluorethyl-, Heptafluorpropyl-, Heptafluorisopropyl-, Pentafluorphenylgruppe.

Bevorzugt sind R' und R" gleich. Besonders bevorzugte unverbrückte Übergangsmetallaromatkomplexe sind solche, in welchen R¹, R⁸, R' und R" gleich sind, ein ganz besonders bevorzugtes Substitutionsmuster ist jenes in welchem R¹, R^{3,} R' und R⁶, R⁸, R'' H bedeuten und R²,R⁴ und R⁵,R⁷ die oben genannte Bedeutung, vorzugsweise tert.-Butyl, jedoch nicht H haben. Der phenolische Rest in (I) ist vorzugsweise ein Biphenolatrest, mit den oben beschriebenen Substitutionsmustern.
Die verbrückten oder nicht-verbrückten Übergangsmetallaromatkomplexe I werden im allgemeinen nach Methoden hergestellt, die dem Fachmann bekannt sind.

Die Synthese der verbrückten Übergangsmetallphenolatkomplexe ist beispielsweise in C. J. Schaverien, J. Am. Chem. Soc. (1995), Seiten 3008 bis 3012, beschrieben. Als gut geeignet hat sich hierbei folgendes Vorgehen erwiesen, wobei in der Regel im Temperaturbereich von -78 bis 110°C, vorzugsweise zunächst bei ca. 20°C gearbeitet wird und die Reaktion dann durch Kochen am Rückfluß vervollständigt wird. Das Biphenol wird zunächst in einem Lösungsmittel, beispielsweise Tetrahydrofuran (THF) deprotoniert, zum Beispiel mit Natriumhydrid oder n-Butyllithium, und anschließend die Übergangsmetallverbindung, beispielsweise das Halogenid, wie Titan-, Zirkonium- oder Hafniumtetrachlorid, vorteilhaft in Form des Bis-THF-Adduktes, hinzugegeben. Nach erfolgter Umsetzung wird das Produkt in der Regel nach Abtrennung von Salzen durch Auskristallisieren erhalten. Die Herstellung von nicht-verbrückten Übergangsmetallphenolatkomplexen kann beispielsweise nach H. Yasuda et. al, J. Organomet. Chem. 473 (1994), Seiten 105 bis 116 erfolgen.

Die im erfindungsgemäßen Verfahren eingesetzten, verbrückten oder nicht-verbrückten Übergangsmetallaromatkomplexe I enthalten in der Regel noch 1 bis 4 Äquivalente einer Lewis-Base, welche in der Regel über die Syntheseroute eingeschleppt wird. Als derartige Lewisbasen sind beispielsweise zu nennen Ether, wie Diethylether oder Tetrahydrofuran (THF) aber auch Amine wie TMEDA. Es ist aber auch möglich die Übergangsmetallaromatkomplexe Lewis-Basen-frei zu erhalten, beispielsweise durch Trocknung im Vakuum oder Wahl anderer Lösungsmittel bei der Synthese. Derartige Maßnahmen sind dem Fachmann bekannt.

Die erfindungsgemäßen racemischen Metallocenkomplexe werden hergestellt durch Umsetzung der verbrückten oder nicht-verbrückten Übergangsmetallaromatkomplexe I mit Cyclopentadienylderivaten der Alkali- oder Erdalkalimetalle und anschließender Erhitzung des so erhaltenen Reaktionsgemisches, gegebenenfalls in Gegenwart von Radikalen oder Radikalbildnern, wie im folgenden beschrieben.

Vorzugsweise setzt man Übergangsmetallaromatkomplexe I ein, in welchen M Zirkonium bedeutet und die Reste R¹ und R⁸ die oben beschriebene, bevorzugte Bedeutung haben. Sehr gut geeignet sind Dichlorobis(3,5-di-tert.-Butylphenolatzirkon · (THF)₂, Dichlorbis(3,5-di-tert.-Butylphenolat)zirkon · (DME), Dichlorbis(2,6-Di-metylphenolat)zirkon . (THF)₂, Dichlorbis(2,6-Dimethylphenolat) zirkon (DME), Dichlorbis(2,4,6 Trimethylphenolat)zirkon · (THF)₂, Dichlorbis(2,4,6 Trimethylphenolat)zirkon (DME) und die in den Beispielen genannten Zirkon-Phenolat-Verbindungen.

Prinzipiell kommen als Cyclopentadienylderivate der Alkali- oder Erdalkalimetalle diejenigen in Frage, welche nach der Umsetzung mit den erfindungsgemäßen, verbrückten Übergangsmetallaromatkomplexen I selektiv, praktisch meso-Isomeren-freie, racemische Metallocenkomplexe liefern.

Die erfindungsgemäßen racemischen Metallocenkomplexe können verbrückt sein, müssen es aber nicht sein. Es genügt im allgemeinen eine hohe Rotationsbarriere, insbesondere im Temperaturbereich von 20 bis 80°C, (bestimmbar mit der Methode der ¹H und/oder ¹³C-NMR-Spektroskopie) der unverbrückten Cyclopentadienyltyp-Liganden im Metallocen, damit die Metallocenkomplexe, direkt in ihrer racemischen Form isoliert werden können, ohne daß sie sich in die meso-Form umwandeln können. Die Rotationsbarriere, die dies gewährleistet, liegt üblicherweise über 20 kJ/mol.

Gut geeignete Cyclopentadienderivate von Alkali- oder Erdalkalimetallen sind solche der allgemeinen Formel II 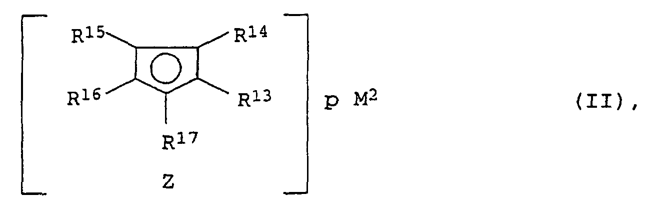 in der die Substituenten und Indizes folgende Bedeutung haben:
- M²: Li, Na, K, Rb, Cs, Be, Mg, Ca, Sr, Ba,
- R¹³ bis R¹⁷: gleich oder verschieden Wasserstoff, C₁- bis C₂₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei benachbarte Reste gemeinsam für 4 bis 15 C-Atome aufweisende cyclische Gruppen stehen können, oder Si(R¹⁸)₃ mit
- R¹⁸: gleich oder verschieden C₁- bis C₁₀-Alkyl, C₆- bis C₁₅-Aryl oder C₃- bis C₁₀-Cycloalkyl,
- Z: für 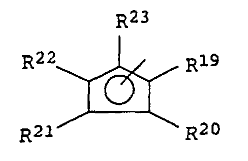 steht,
wobei die Reste
- R¹⁹ bis R²³: gleich oder verschieden Wasserstoff, C₁- bis C₂₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten, wobei benachbarte Reste gemeinsam für 4 bis 15 C-Atome aufweisende cyclische Gruppen stehen können, oder Si (R²⁴)₃ mit
- R²⁴: gleich oder verschieden C₁- bis C₁₀-Alkyl, C₆- bis C₁₅-Aryl oder C₃- bis C₁₀-Cycloalkyl,
oder wobei die Reste
- R¹⁶ und Z: gemeinsam eine Gruppierung -[T(R²⁵)(R²⁶)]ₙ-E- bilden, in der
- T: gleich oder verschieden sein kann und für Silicium, Germanium, Zinn oder Kohlenstoff steht,
- R²⁵, R²⁶: für Wasserstoff, C₁- bis C₁₀-Alkyl, C₃- bis C₁₀-Cycloalkyl oder C₆- bis C₁₅-Aryl
- n: für die Zahlen 1, 2, 3 oder 4,
- E: für 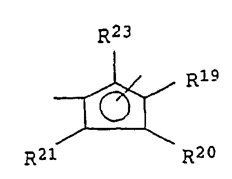 oder A steht, wobei A ―O― , ―S―, 〉NR²⁷ oder 〉PR²⁷ bedeutet,
- mit R²⁷: gleich oder verschieden C₁- bis C₁₀-Alkyl, C₆- bis C₁₅-Aryl, C₃- bis C₁₀-Cycloalkyl, Alkylaryl oder Si(R²⁸)₃
- mit R²⁸: gleich oder verschieden C₁- bis C₁₀-Alkyl, C₆- bis C₁₅-Aryl, C₃- bis C₁₀-Cycloalkyl oder Alkylaryl,
wobei
p = 1 für Be, Mg, Ca, Sr, Ba und
p = 2 für Li, Na, K, Rb, Cs.

Bevorzugte Verbindungen der Formel II sind solche in welchen M² Lithium, Natrium und insbesondere Magnesium bedeutet. Ferner sind solche Verbindungen der Formel II a) 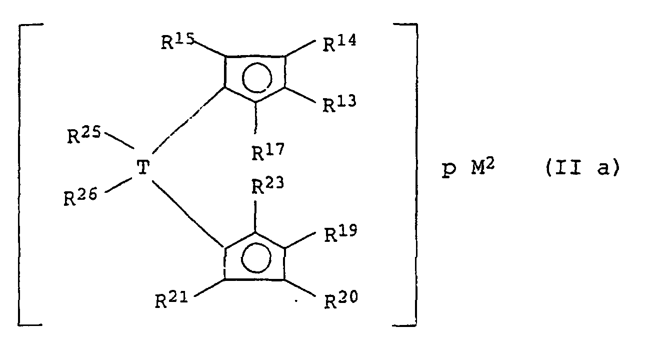 besonders bevorzugt in welchen M² Magnesium, R¹⁷ und R²³ von Wasserstoff verschiedene Substituenten bedeuten, wie C₁- bis C₁₀-Alkyl, also Methyl, Ethyl, n-Propyl, i-Propyl, n-Butyl, sec.-Butyl, tert.-Butyl, i.-Butyl, Hexyl, weiterhin C₆-C₁₀-Aryl, wie Phenyl oder Trialkylsilyl, wie Trimethylsilyl, T(R²⁵R²⁶) für Bis-C₁-C₁₀-alkylsilyl oder Bis-C₆-C₁₀-arylsilyl steht wie Dimetylsilyl, Diphenylsilyl, weiterhin für 1,2-Ethyandiyl, Methylen und die Reste R¹³ bis R¹⁵ und R¹⁹ bis R²⁵ die bereits genannte Bedeutung haben und insbesondere ein Indenyltyp-Ringsystem oder ein Benzoindenyltyp-Ringsystem bilden.

Ganz besonders bevorzugte Verbindungen II sind jene, welche in den Beispielen beschrieben werden und außerdem
Dimethylsilandiylbis(3-tert.-butyl-5-methylcyclopentadienyl)-magnesium
Diethylsilandiylbis(3-tert.-butyl-5-methylcyclopentadienyl)-magnesium
Dimethylsilandiylbis(3-tert.-butyl-5-ethylcyclopentadienyl)-magnesium
Dimethylsilandiylbis(3-tert.-pentyl-5-methylcyclopentadienyl)-magnesium
Dimethylsilandiylbis(2,4,7-trimethylindenyl)magnesium
1,2-Ethandiylbis(1-{2,4,7-trimethylindenyl)}magnesium
Dimethylsilandiylbis(1-indenyl)magnesium
Dimethylsilandiylbis(4,5,6,7-tetrahydro-1-indenyl)magnesium
Dimethylsilandiylbis(2-methylindenyl)magnesium
Phenyl(methyl)silandiylbis(2-methylindenyl)magnesium
Diphenylsilandiylbis(2-methylindenyl)magnesium
Dimethylsilandiylbis(2-methyl-4,5,6,7-tetrahydro-1-indenyl)-magnesium
Dimethylsilandiylbis(2,4-dimethyl-6-isopropylindenyl)magnesium
Dimethylsilandiylbis(2-methyl-1-benzindenyl)magnesium
Dimethylsilandiylbis(2-ethyl-1-benzindenyl)magnesium
Dimethylsilandiylbis(2-propyl-1-benzindenyl)magnesium
Dimethylsilandiylbis(2-phenyl-1-benzindenyl)magnesium
Diphenylsilandiylbis(2-methyl-1-benzindenyl)magnesium
Phenylmethylsilandiylbis(2-methyl-1-benzindenyl)magnesium
Ethandiylbis(2-methyl-1-benzindenyl)magnesium
Dimethylsilandiylbis(2-methyl-1-tetrahydrobenzindenyl)magnesium
Dimethylsilandiylbis(2-methyl-4-isopropyl-1-indenyl)magnesium
Dimethylsilandiylbis(2-methyl-4-phenyl-1-indenyl)magnesium
Dimethylsilandiylbis(2-methyl-4-naphtyl-1-indenyl)magnesium
Dimethylsilandiylbis(2-methyl-4-{3,5-trifluoromethyl}phenyl-1-indenyl)magnesium
Dimethylsilandiylbis(2-ethyl-4-isopropyl-1-indenyl)magnesium
Dimethylsilandiylbis(2-ethyl-4-phenyl-1-indenyl)magnesium
Dimethylsilandiylbis(2-ethyl-4-naphtyl-1-indenyl)magnesium
Dimethylsilandiylbis(2-ethyl-4-{3,5-trifluoromethyl}phenyl-1-indenyl)magnesium
Ethandiylbis(2-methyl-4-phenyl-1-indenyl)magnesium
Ethandiylbis(2-methyl-4-naphtyl-1-indenyl)magnesium
Ethandiylbis(2-methyl-4-{3,5-di-(trifluoromethyl)}phenyl-1-indenyl)magnesium
Dimethylsilandiylbis(2-methyl-4-(4'-tert.-butyl-phenyl)-indenyl) magnesium
Dimethylsilandiylbis(2-methyl-4- (4'-tert.-butyl-phenyl)-indenyl)-(2-isopropyl-4-(4'-tert.-butyl-phenyl)-indenyl)magnesium
Dimethylsilandiylbis(2-cyclohexyl-4-phenyl-indenyl)magnesium
Dimethylsilandiylbis(2-butyl-4-phenyl-indenyl)magnesium
Dimethylsilandiylbis(2-ethyl-4-(4'-tert.-butyl-phenyl)-indenyl) magnesium
Dimethylsilandiylbis(2-propyl-4-(4'-tert.-butyl-phenyl)-indenyl) magnesium
Diemethylgermandiylbis(2-meth-4-(4'-tert.-butyl-phenyl)-indenyl) magnesium
Diethylsilandiylbis(2-methyl-4-(4'-tert.-butyl-phenyl)-indenyl) magnesium
Diemthylsilandiylbis(2-butyl-4-(4'-tert.-butyl-phenyl)-indenyl) magnesium
Dimethylsilandiyl(2-methyl-4-(4'-tert.-butyl-phenyl)-indenyl)-(4-(4'-tert.-butyl-phenyl)-indenyl)magnesium
Dimethylsilandiylbis(2-butyl-4-(4'-tert.-butyl-phenyl-6-(4'tert.-butyl-phenyl)-indenyl)-magnesium
Dimethylsilandiylbis(2-isopropyl-4-(4'-tert.-butyl-phenyl)-indenyl)magnesium
Dimethylsilandiylbis(2-isopropyl-4-(4'-tert.-butyl-phenyl)-indenyl)magnesium
Dimethylsilandiyl(2-ethyl-4-(4'-tert.-butyl-phenyl)-indenyl)-2-isopropyl-4-(4'-tert.-butyl-phenyl)-indenyl)magnesium
Dimethylsilandiyl(2-methyl-4-naphtyl-indenyl)-(2-isopropyl-4-(4'-tert.-butyl-phenyl)-indenyl)magnesium
sowie die jeweiligen Lewis-Basenaddukte dieser vorstehend genannten Verbindungen mit beispielswiese THF, DME, TMEDA.

Derartige Alkali- oder Erdalkalimetallverbindungen II lassen sich nach literaturbekannten Methoden erhalten, beispielsweise durch die, vorzugsweise stöchiometrische, Umsetzung einer Organometallverbindung oder eines Hydrids des Alkali- oder Erdalkalimetalls mit dem entsprechenden Cyclopentadienyltyp-Kohlenwasserstoff. Geeignete Organometallverbindungen sind beispielsweise n-Butyllithium, Di-n-butylmagnesium oder (n,s)-Dibutylmagnesium (Bomag).

Die Umsetzung der verbrückten oder nicht-verbrückten Übergangsmetallaromatkomplexe I mit den Cyclopentadienylderivaten von Alkali- oder Erdalkalimetallen, vorzugsweise der Formeln II oder IIa) findet üblicherweise in einem organischen Lösungs- oder Suspensionsmittel, vorzugsweise in einem Lösungsmittelgemisch, welches ein Lewis-basisches Lösungsmittel enthält im Temperaturbereich von - 78°C bis 250°C, vorzugsweise im Temperaturbereich von 0 bis 110°C statt. Gut geeignete Lösungsmittel sind aliphatische Kohlenwasserstoffe, wie Pentan, Hexan, Heptan, aromatische Kohlenwasserstoffe wie Toluol, ortho-, meta- oder para Xylol oder Isopropylbenzol (Cumol), Ether, wie Tetrahydrofuran (THF), Diethylether, Metyl-tert-Butylether oder Dimethoxyethan (DME), Amine wie Diisopropylamin, Tertramethylethandiamin (TMEDA) oder Pyridin. Gut geeignete Lösungsmittelgemische sind solche aus Toluol und THF, Toluol und DME oder Toluol und TMEDA, wobei die Lewis-Base im allgemein in einer Menge von 0,1 bis 50 mol-%, vorzugsweise 1 bis 20 mol-%, bezogen auf das Lösungsmittelgemisch, vorliegt. Das molare Verhältnis des Übergangsmetallaromatkomplexes I zu dem Cyclopentadienylderivat von Alkali- oder Erdalkalimetallen liegt üblicherweise im Bereich von 0,8 : 1 bis 1 : 1,2, vorzugsweise bei 1 : 1.

Es wurde gefunden, daß eine anschließende Erwärmung des Reaktionsgemisches, auf Temperaturen im Bereich von -78 bis 250°C, vorzugsweise 20 bis 150°C und insbesondere 80 bis 110°C und gegebenenfalls in Gegenwart von Radikalen oder Radikalbildnern schnell zu einer höheren Ausbeute, im allgemeinen 80 bis 100 %, vorzugsweise 95 bis 100 %, an racemischen Komplexen (I) führt. Als Radikale seien genannt Sauerstoff, 2,2'-6,6'-tetramethyl-Pyrimidin-N-Oxid (TEMPO). Als Radikalbildner sind alle diejenigen organischen und anorganischen Verbindungen geeignet, welche in dem oben genannten Temperaturintervall und/oder bei Bestrahlung zu Radikalen zerfallen, wie Peroxide, Diacylperoxide - beispielsweise Benzoylperoxid, Acetylperoxyd - Peroxydicarbonate, Perester, Azoalkane, Nitrite, Hypochloride, Polyhalomethane, N-Chloramine. Besonders bevorzugt verwendet man TEMPO. Radikalbildner werden bevorzugt dann eingesetzt, wenn das Metallocen der Formel III als Cyclopentadienyl-Typ-Ligand ein benzoannelliertes Indenylsystem wie Dimethylsilyl-Bis(2-Methylbenzoindenyl) enthält.

Die erfindungsgemäßen, racemischen Metallocenkomplexe sind vorzugsweise solche der allgemeinen Formel III 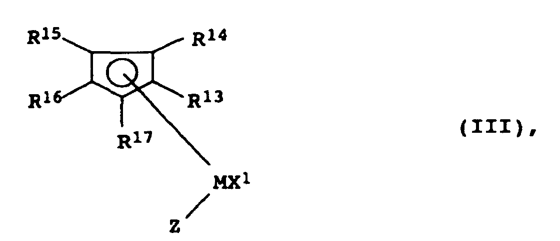 in der die Substituenten und Indizes folgende Bedeutung haben:
- M: Titan, Zirkonium, Hafnium, Vanadium, Niob, Tantal, Chrom, Molybdän, Wolfram, sowie Elemente der III. Nebengruppe des Periodensystems und der Lanthanoiden,
- X¹: 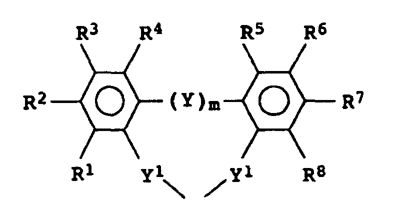
wobei:
- R¹, R⁸: gleich oder verschieden Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
wobei die genannten Reste teilweise oder vollständig mit Heteroatomen substituiert sein können, -OR²⁷, - SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
- R² bis R⁷: gleich oder verschieden Wasserstoff, C₁- bis C₂₀-Alkyl, 3- bis 8-gliedriges Cycloalkyl - das seinerseits ein C₁- bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen und die genannten Reste können vollständig oder teilweise mit Heteroatomen substituiert sein, -OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
- Y, Y¹: gleich oder verschieden 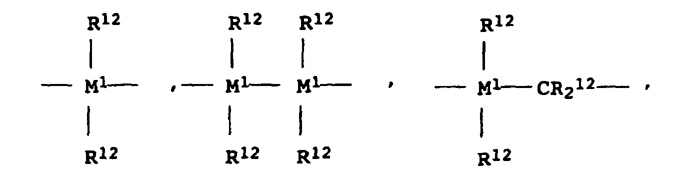 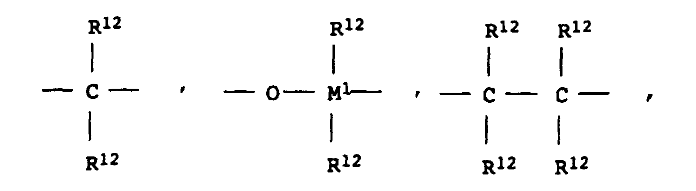 - B(R¹²)-, -Al(R¹²)-, -Ge-, -Sn-, -O-, -S-, -S(O)-, -S(O)₂-, -N(R¹²)-, -C(O)-,- P(R¹²)- oder -P(O)(R¹²)-,
wobei
- R¹²: gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
- M¹: Silicium, Germanium oder Zinn ist und
- m: 0, 1, 2, 3 bedeutet, oder Y nicht-verbrückend ist und für zwei Reste R' und R" steht, wobei
- R' und R": gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können, -OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
- R¹³ bis R¹⁷: gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl, wobei benachbarte Reste gemeinsam für 4 bis 15 C-Atome aufweisende cyclische Gruppen stehen können, oder Si(R¹⁸)₃ mit
- R¹⁸: gleich oder verschieden C₁- bis C₁₀-Alkyl, C₆- bis C₁₅-Aryl oder C₃- bis C₁₀-Cycloalkyl,

- Z: für 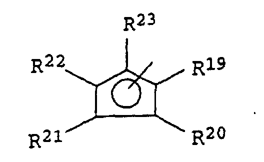 steht,
wobei die Reste
- R¹⁹ bis R²³: gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl bedeuten, wobei benachbarte Reste gemeinsam für 4 bis 15 C-Atome aufweisende cyclische Gruppen stehen können, oder Si(R²⁴)₃ mit
- R²⁴: gleich oder verschieden C₁- bis C₁₀-Alkyl, C₆- bis C₁₅-Aryl oder C₃- bis C₁₀-Cycloalkyl,
oder wobei die Reste
- R¹⁶ und Z: gemeinsam eine Gruppierung -[T(R²⁵)(R²⁶)]_{q}-E- bilden, in der
- T: gleich oder verschieden sein kann und für Silicium, Germanium, Zinn oder Kohlenstoff steht,
- R²⁵, R²⁶: für Wasserstoff, C₁- bis C₁₀-Alkyl, C₃- bis C₁₀-Cycloalkyl oder C₆- bis C₁₅-Aryl
- q: für die Zahlen 1, 2, 3 oder 4,
- E: für 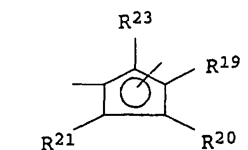 oder A steht, wobei A ―O―, ―S―, 〉NR²⁷ oder 〉PR²⁷ bedeutet,
- mit R²⁷: gleich oder verschieden C₁- bis C₁₀-Alkyl, C₆- bis C₁₅-Aryl, C₃- bis C₁₀-Cycloalkyl, Alkylaryl oder Si(R²⁸)₃
- mit R²⁸: gleich oder verschieden C₁- bis C₁₀-Alkyl, C₆- bis C₁₅-Aryl, C₃- bis C₁₀-Cycloalkyl oder Alkylaryl.

Bevorzugte Verbindungen der Formel III sind solche in welchen M Titan, Hafnium und insbesondere Zirkonium bedeutet. Ferner sind verbrückte Verbindungen der Formel III besonders bevorzugt (ansa-Metallocene) in welchen R¹⁷ und R²³ von Wasserstoff verschiedene Substituenten bedeuten, wie C₁- bis C₁₀-Alkyl, also Methyl, Ethyl, n-Propyl, i-Propyl, n-Butyl, sec.-Butyl, tert.-Butyl, i.-Butyl, Hexyl, weiterhin C6-C₁₀-Aryl, wie Phenyl oder Trialkylsilyl, wie Trimethylsilyl, T(R²⁵R²⁶) für Bis-C₁-C₁₀-alkylsilyl oder Bis-C₆-C₁₀-arylsilyl steht wie Dimetylsilyl, Diphenylsilyl, weiterhin für 1,2-Ethandiyl, Methylen und die Reste R¹³ bis R¹⁵ und R¹⁹ bis R²⁵ die bereits genannte Bedeutung haben und insbesondere ein Indenyltyp-Ringsystem oder ein Benzoindenyltyp-Ringsystem bilden.

Ganz besonders bevorzugte Verbindungen III sind jene, welche in den Beispielen beschrieben werden, und außerdem
Dimethylsilandiylbis(3-tert.-butyl-5-methylcyclopentadienyl)zirconium-3,3',5,5'-tetra-t-butyl-1,1'-bi-2-phenolat
Diethylsilandiylbis(3-tert.-butyl-5-methylcyclopentadienyl)zirconium-3,3',5,5'-tetra-t-butyl-1,1'-bi-2-phenolat
Dimethylsilandiylbis(3-tert.-butyl-5-ethylcyclopentadienyl)zirconium-3,3',5,5'-tetra-t-butyl-1,1'-bi-2-phenolat
Dimethylsilandiylbis(3-tert.-pentyl-5-methylcyclopentadienyl) zirconium-3,3',5,5'-tetra-t-butyl-1,1'-bi-2-phenolat
Dimethylsilandiylbis(2,4,7-trimethylindenyl)zirconium-3,3', 5,5'-tetra-t-butyl-1,1'-bi-2-phenolat
1,2-Ethandiylbis(1-{2,4,7-trimethylindenyl)}zirconium-3,3', 5,5'-tetra-t-butyl-1,1'-bi-2-phenolat
Dimethylsilandiylbis(1-indenyl)Zirconium-3,3',5,5'-tetra-tbutyl-1,1'-bi-2-phenolat
Dimethylsilandiylbis(4,5,6,7-tetrahydro-1-indenyl)zirconium-3,3', 5,5'-tetra-t-butyl-1,1'-bi-2-phenolat
Dimethylsilandiylbis(2-methylindenyl)zirconium-3,3',5,5'-tetra-tbutyl-1,1'-bi-2-phenolat
Phenyl (methyl)silandiylbis(2-methylindenyl)zirconium-3,3', 5,5'-tetra-t-butyl-1,1'-bi-2-phenolat
Diphenylsilandiylbis(2-methylindenyl)zirconium-3,3',5,5'-tetra-tbutyl-1,1'-bi-2-phenolat
Dimethylsilandiylbis(2-methyl-4,5,6,7-tetrahydro-1-indenyl) zirconium-3,3', 5,5'-tetra-t-butyl-1,1'-bi-2-phenolat
Dimethylsilandiylbis(2,4-dimethyl-6-isopropylindenyl) zirconium-3,3', 5,5'-tetra-t-butyl-1,1'-bi-2-phenolat
Dimethylsilandiylbis(2-methyl-1-benzindenyl)zirconium-3,3', 5,5'-tetra-t-butyl-1,1'-bi-2-phenolat
Dimethylsilandiylbis(2-ethyl-1-benzindenyl)zirconium-3,3', 5,5'-tetra-t-butyl-1,1'-bi-2-phenolat
Dimethylsilandiylbis(2-propyl-1-benzindenyl)zirconium-3,3', 5,5'-tetra-t-butyl-1,1'-bi-2-phenolat
Dimethylsilandiylbis(2-phenyl-1-benzindenyl)zirconium-3,3', 5,5'-tetra-t-butyl-1,1'-bi-2-phenolat
Diphenylsilandiylbis(2-methyl-1-benzindenyl)zirconium-3,3', 5,5'-tetra-t-butyl-1,1'-bi-2-phenolat
Phenylmethylsilandiylbis(2-methyl-1-benzindenyl)zirconium-3,3', 5,5'-tetra-t-butyl-1,1'-bi-2-phenolat
Ethandiylbis(2-methyl-1-benzindenyl)zirconium-3,3',5,5'-tetra-tbutyl-1,1'-bi-2-phenolat
Dimethylsilandiylbis(2-methyl-1-tetrahydrobenzindenyl)zirconium-3,3',5,5'-tetra-t-butyl-1,1'-bi-2-phenolat
Dimethylsilandiylbis(2-methyl-4-isopropyl-1-indenyl)zirconium-3,3',5,5'-tetra-t-butyl-1,1'-bi-2-phenolat
Dimethylsilandiylbis(2-methyl-4-phenyl-1-indenyl)zirconium-3,3',5,5'-tetra-t-butyl-1,1'-bi-2-phenolat
Dimethylsilandiylbis(2-methyl-4-naphtyl-1-indenyl)zirconium-3,3',5,5'-tetra-t-butyl-1,1'-bi-2-phenolat
Dimethylsilandiylbis(2-methyl-4-{3,5-trifluoromethyl}phenyl-1-indenyl)zirconium-3,3',5,5'-tetra-t-butyl-1,1'-bi-2-phenolat
Dimethylsilandiylbis(2-ethyl-4-isopropyl-1-indenyl)zirconium-3,3',5,5'-tetra-t-butyl-1,1'-bi-2-phenolat
Dimethylsilandiylbis(2-ethyl-4-phenyl-1-indenyl)zirconium-3,3',5,5'-tetra-t-butyl-1,1'-bi-2-phenolat
Dimethylsilandiylbis(2-ethyl-4-naphtyl-1-indenyl)zirconium-3,3',5,5'-tetra-t-butyl-1,1'-bi-2-phenolat
Dimethylsilandiylbis(2-ethyl-4-{3,5-trifluoromethyl}phenyl-1-indenyl)zirconium- 3,3',5,5'-tetra-t-butyl-1,1'-bi-2-phenolat
Ethandiylbis(2-methyl-4-phenyl-1-indenyl)zirconium-3,3',5,5'- tetra-t-butyl-1,1'-bi-2-phenolat
Ethandiylbis(2-methyl-4-naphtyl-1-indenyl)zirconium-3,3',5,5'tetra-t-butyl-1,1'-bi-2-phenolat
Ethandiylbis(2-methyl-4-{3,5-di-(trifluoromethyl)}phenyl-1-indenyl)zirconium-3,3',5,5'-tetra-t-butyl-1,1'-bi-2-phenolat
Dimethylsilandiylbis(2-methyl-4-(4'-tert.-butyl-phenyl)-idenyl)zirconium-3,3'5,5'tetra-tBu-1,1'-bi-2-phenolat
Dimethylsilandiyl(2-methyl-4-(4'-tert.-butyl-phenyl)-idenyl)-(2-isopropyl-4-(4'-tert.-butyl-phenyl)-indenyl)-zirconium-3,3'5,5'tetra-tBu-1,1'-bi-2-phenolat
Dimethylsilandiylbis(2-cyclohexyl-4-phenyl-indenyl) zirconium-3,3'5,5'tetra-tBu-1,1'-bi-2-phenolat
Dimethylsilandiylbis(2-butyl-4-phenyl-indenyl)zirconium-3,3'5,5'tetra-tBu-1,1'-bi-2-phenolat
Dimethylsilandiylbis(2-ethyl-4-(4'-tert.-butyl-phenyl)-indenyl) zirconium-3,3'5,5'tetra-tBu-1,1'-bi-2-phenolat
Dimethylsilandiylbis(2-propyl-4-(4'-tert.-butyl-phenyl)-indenyl) zirconium-3,3'5,5'tetra-tBu-1,1'-bi-2-phenolat
Dimethylgermandiylbis(2-methyl-4-(4'-tert.-butyl-phenyl)-indenyl) zirconium-3,3'5,5'tetra-tBu-1,1'-bi-2-phenolat
Diethylsilandiylbis(2-methyl-4-(4'-tert.-butyl-phenyl)-indenyl)-zirconium-3,3'5,5'tetra-tBu-1,1'-bi-2-phenolat
Dimethylsilandiylbis(2-butyl-4- (4'-tert.-butyl-phenyl) -indenyl) zirconium-3,3'5,5'tetra-tBu-1,1'-bi-2-phenolat
Dimethylsilandiyl(2-methyl-4-(4'-tert.-butyl-phenyl)-indenyl)-4-(4'-tert.-butyl-phenyl)-indenyl)zirconium-3,3'5,5'tetratBu-1,1'-bi-2-phenolat
Dimethylsilandiylbis(2-butyl-4-(4'-tert.-butyl-phenyl)-6-(4'-tert.-butyl-phenyl)-indenyl)zirconium-3,3'5,5'tetratBu-1,1'-bi-2-phenolat
Dimethylsilandiylbis(2-isopropyl-4-(4'-tert.-butyl-phenyl)-indenyl)zirconium-3,3'5,5'tetra-tBu-1,1'-bi-2-phenolat
Dimethylsilandiyl(2-ethyl-4-(4'-tert.-butyl-phenyl)-indenyl)-(2-isopropyl-4-(4'-tert.-butyl-phenyl)-indenyl)zirconium-3,3'5,5'tetra-tBu-1,1'-bi-2-phenolat
Dimethylsilandiyl(2-methyl-4-naphthyl-indenyl)-(2-isopropyl-4-(4'-tert.-butyl-phenyll-indenyl)zirconium-3,3'5,5'tetratBu-1,1'-bi-2-phenolat

Die racemischen Metallocenkomplexe, vorzugsweise jene der allgemeinen Formel III, lassen sich im allgemeinen weiter modifizieren.

Insbesondere kann beispielsweise ein verbrückter Biphenolatligand X¹ vollständig oder hälftig oder einer oder beide unverbrückten Phenolatliganden in dem Komplex III durch Mono- oder Bis-Substitution abgespalten und gegebenenfalls wiederverwendet werden. Geeignete Abspaltungs-(Substitutions-)methoden sind die Umsetzung der racemischen Metallocenkomplexe, vorzugsweise jene der allgemeinen Formel III mit SOCl₂, Siliciumtetrachlorid, Methylaluminiumdichlorid, Dimethylaluminiumchlorid, Aluminiumtrichlorid einer Brönsted-Säure wie Halogenwasserstoff, also HF, HBr, HI, vorzugsweise HCl, welche in der Regel in Substanz oder als Lösung in Wasser oder organischen Lösungsmitteln wie Diethylether, THF angewandt wird. Gut geeignete Lösungsmittel sind aliphatische Kohlenwasserstoffe, wie Pentan, Hexan, Heptan, aromatische Kohlenwasserstoffe wie Toluol, ortho-, meta- oder para Xylol oder Isopropylbenzol (Cumol), Ether, wie Tetrahydrofuran (THF), Diethylether, Metyl-tert-Butylether oder Dimethoxyethan (DME), Amine wie Diisopropylamin, Tertramethylethandiamin (TMEDA) oder Pyridin. Sehr gut geeignet sind Lewis-Base-haltige Lösungsmittelgemische aus Kohlenwasserstoffen und Ethern oder Aminen oder beidem, beispielsweise solche aus Toluol und THF, Toluol und DME oder Toluol und TMEDA, wobei die Lewis-Base im allgemein in einer Menge von 0,01-50 mol-%, vorzugsweise 0,1-10 mol-%, bezogen auf das Lösungsmittelgemisch, vorliegt. Besonders gut eignen sich Carbonsäurehalogenide wie Acetylchlorid, Phenylacetylchlorid, 2-Thiophenacetylchlorid, Trichloracetylchlorid, Trimethylacetylchlorid, O-Acetylmandelsäurechlorid, 1,3,5-Benzenetricarboxylicacidchlorid, 2,6-Pyridincarbonsäurechlorid, tert-Butylacetylchlorid, Chloroacetylchlorid, 4-Chlorobenzeneacetylchlorid, Dichloroacetylchlorid, 3-Methoxyphenylacetylchlorid, Acetylbromid, Bromoacetylbromid, Acetylfluorid, Benzoylfluorid, als "Abspaltungsreagenz", wobei diese in der Regel in den o.g. Lösungsmittel oder auch in Substanz verwendet werden. Hierbei entsteht üblicherweise das der Formel III analoge Di-Halogenid (X = F, Cl, Br, I) oder bei teilweiser (hälftiger) Substitution des phenolischen Liganden ein Monohalogenid. Ein weiteres gut geeignetes Substitutions-Verfahren ist die Umsetzung der racemischen Metallocenkomplexe, vorzugsweise jene der allgemeinen Formel III mit Organo-Aluminiumverbindungen wie Tri-C₁-bis C₁₀-Alkylaluminium, also Trimethylaluminium, Triethylaluminium, Tri-n-butylaluminium, Triiso-butylaluminium. Hierbei entsteht nach derzeitigem Kenntnisstand im allgemeinen die zu III analoge Organo-Verbindung (X = organischer Rest, z.B. C₁- bis C₁₀-Alkyl, wie Methyl, Ethyl, n-Butyl, i-Butyl) und beispielsweise das Organo-Aluminiumbinaphtholat. Analog kann auch verfahren werden, wenn der Ligand X¹ in dem Komplex III zwei nicht verbrückte Phenolatliganden ist.

Bei den Spaltungsreaktionen werden die Komponenten üblicherweise im stöchiometrischen Verhältnis eingesetzt, davon abhängig, ob ein mono- oder disubstituiertes Produkt erhalten werden soll.

Die Spaltungsreaktionen finden im allgemeinen unter Erhaltung der Stereochemie der Metallocenkomplexe statt, das bedeutet, es findet im allgemeinen keine Umwandlung der racemischen Form in die meso-Form der Metallocenkomplexe statt. Vielmehr kann, insbesondere mit den oben beschriebenen Chlorierungsmethoden, die rac-Selektivität gesteigert werden, wobei jedoch die Stereochemie der Ausgangs(bi)phenolat-Typ- oder Ausgangsbis-phenolat-Komplexe in der Regel erhalten bleibt.

Das erfindungsgemäße Verfahren zeichnet sich dadurch aus, daß es sehr selektiv die racem-Form von Metallocenkomplexen zugänglich macht. Besonders vorteilhaft lassen sich verbrückte Indenyl- oder Benzoindenyltyp-Metallocene erhalten, welche in der Nachbarschaft des Brückenglieds (sogenannte 2-Stellung) einen von Wasserstoff verschiedenen Liganden haben.

Die erfindungsgemäßen racemischen Metallocenkomplexe, insbesondere jene der allgemeinen Formell III oder ihre, beispielsweise durch Substitution der Phenolatliganden zugänglichen, bereits beschriebenen Derivate lassen sich als Katalysatoren oder in Katalysatorsystemen für die Polymerisation von olefinisch ungesättigten Verbindungen, wie Ethylen, Propylen, 1-Buten, 1-Hexen, 1-Octen, Styrol, verwenden. Besonders vorteilhaft kommen sie zur Geltung bei der stereoselektiven Polymerisation von prochiralen, olefinisch ungesättigten Verbindungen, wie Propylen, Styrol. Geeignete Katalysatoren oder Katalysatorsysteme, in welchen die erfindungsgemäßen racemischen Metallocenkomplexe als "Metallocenkomponente" fungieren können, werden üblicherweise mittels metalloceniumionenbildenden Verbindungen enthalten, wie beispielsweise in EP-A-0 700 935, Seite 7, Zeile 34 bis Seite 8, Zeile 21 und Formeln (IV) und (V) beschrieben. Weitere metalloceniumionenbildenden Verbindungen sind Alumoxan (RAlO)ₙ wie Methylaluminoxan.

Die erfindungsgemäßen racemischen Metallocenkomplexe, insbesondere jene der allgemeinen Formel III oder ihre, beispielsweise durch Abspaltung der Phenolatliganden zugänglichen, bereits beschriebenen Derivate lassen sich weiterhin als Reagenzien oder als Katalysatoren oder in Katalysatorsystemen in der stereoselektiven, insbesondere organischen Synthese verwenden. Beispielsweise seien genannt die stereoselektive Reduktionen oder stereoselektiven Alkylierungen von C=C-Doppelbindungen oder C=O-, C=N-Doppelbindungen.

### Beispiele

Abkürzungen:
bpo= 1,1'-Bi-2-Phenolat
bip = 3,3'-5,5'tetra-t-Bu-1,1'-bi-2-Phenolat

### Beispiele bei denen man rac-Selektivität durch thermische Isomerisierung erreicht.

### Beispiel 1

### Darstellung von rac-Me₂Si(2-Me-ind)₂Zr[3,3',5,5'-(t-Bu)₄-1,1'bi-2-phenolat]

### (rac-Me₂Si(2-Me-ind)₂Zr(bip) (4C)

0.64g (1.95 mmol) Me₂Si(2-Me-ind)₂Li₂ und 1.39 g (1.95 mmol) Cl₂(THF)₂Zr(bip) wurden trocken vermischt und ca. 15 ml eines 10:1 Gemisches Toluol/THF (Volumenverhältnis) zugegeben. Die Reaktionsmischung wurde 12 h bei Raumtemperatur gerührt. Hierbei bildete sich eine orange-farbene Lösung und ein weißer Niederschlag. (LiCl). Das ¹H-NMR-Spektrum der Rohmischung zeigte ein Isomerenverhaeltnis von ca. 1:1. Die Reaktionsmischung wurde 5 h bei 80°C gerührt. Das ¹H-NMR-Spektrum zeigte nun ein rac/meso-Verhaeltnis von ca. 16:1. Die Lösung wurde abfiltriert und das Lösungsmittelgemisch am Hochvakuum entfernt. Es wurden 1.17 g (74%) Me₂Si(2-Meind)₂Zr(bip) als gelber Schaum in einem rac/meso-Verhaeltnis von 16:1 NMR-spektroskopisch rein erhalten. Der gelbe Schaum wurde in Hexan aufgenommen und auf -30°C gekühlt. Nach einem Tag wurden durch Filtration 0.35 g (22%) rein racemisches Me₂Si(2-Me-ind)₂Zr (bip) als mikrokristallines gelbes Pulver erhalten. ¹H-NMR-Spektrum in C₆D₆ siehe Tabelle B. ¹³C-NMR-Spektrum in C₆D₆(25°C, 600 MHz) 161.1, 141.2, 135.3, 134.8, 134.3, 131.8, 130.9, 129.7, 126.0, 126.8, 124.9, 123.3, 121.8, 111.6, 92.4, 34.3, 32.5, 32.1, 31.8, 18.8, 2.55. Das Massenspektrum (EI-MS/ 70eV) zeigte Molekularionenpeak bei m/e 812-821 mit der typischen Isotopenverteilung. Elementaranalyse Gefunden: C 73.64% ; H 7.73 %; Zr 11.06.berechnet C 73.74 %; H 7.67 %; Zr 11.20%.

**Tabelle B**

| 1H-NMR-shifts für Komplex rac-4C (in ppm, C₆D₆, 25°C, 600 MHz) | |
|---|---|
| | Zuordnung^{a} |
| 7.60 (d, 2H) ³J (8.4 Hz) | C₉H₅ (H7, H7') |
| 7.49 (d, 2H) ⁴J (2.4 Hz) | C₆H₂ (H4, H4') |
| 7.26 (d, 2H) ³J (8.4 Hz) | C₉H₅ (H4, H4') |
| 7.18 (d, 2H) ⁴J(2.4 Hz) | C₆H₂ (H6, H6') |
| 6.85 (dd, 2H) ³J (8.4 Hz) ³J (7.2 Hz) | C₉H₅ (H6, H6') |
| 6.77 (dd, 2H) ³J (8.4 Hz) ³J (7.2 Hz) | C₉H₅ (H5, H5') |
| 5.83 (s, 2H) | C₉H₅ (H3, H3') |
| 2.21 (s, 6H) | (2-CH₃-C₉H₅) |
| 1.36, 1.33 (s, 18H) | (CH₃)₃C |
| 0.80 (s,6H) | (CH₃)₂Si |

| | |
|---|---|
| ^{a} Zuordnung durch 1H-NMR-ROESY-Technik | |

### Beispiel 2

### Synthese von Me₂Si(2-Me-ind-4-Ph)₂Zr(3,3'-5,5'-tetra-^{t}Bu-1,1'bi-2-phenolat)

### (Me₂Si(2-Me-4-Ph-ind)₂Zr(bip)

A) Synthese von ZrCl₄(THF)₂
Zu einer Suspension von g 4.99(21.41mmol)ZrCl₄ in 80 ml Toluol wurden bei 0°C (Eisbadkühlung) 3.1g (43.0 mmol) THF innerhalb 15 min. langsam zugetropft. Die Suspension wurde auf Raumtemperatur erwärmt und 1 h gerührt.
B) Synthese von (3,3'-5,5'-tetra-^{t}Bu-1,1'-bi-2-phenolat)Li₂
Zu einer Lösung von 8.79 g (21.4 mmol) 3,3'-5,5'-tetra-^{t}Bu-1,1'-bi-2-phenol in 120 ml Toluol und 3.1g (43.0 mmol) THF wurden bei 0°C (Eisbadkühlung) 17.0 ml ( 45.56 mmol) einer 2.68 molaren BuLi-Lösung in Toluol innerhalb 20 min. langsam zugetropft. Die klare Lösung wurde auf Raumtemperatur erwärmt und 1 h gerührt.
C) Synthese von Cl₂Zr(3,3'-5,5'-tetra-^{t}Bu-1,1'-bi-2-phenolat) (THF) ₂
Zu der ZrCl₄(THF)₂-Suspension aus Teilreaktion A) wurde unter Stickstoff mittels Kanüle die Dilithiumbipenolatlösung aus Teilreaktion B) zugegeben. Verbleibende Reste im Kolben an Dilithiumbipenolatlösung wurden mit 10 ml Toluol nachgespült. Die Suspension wurde 4h bei Raumtemperatur gerührt.
D) Synthese von Me₂Si(2-Me-4-Ph-ind)₂Li₂
Zu einer Lösung von 9.8 g (20.90 mmol) Me₂Si(2-Me-4-Ph-indH)₂ in 110ml Toluol und 5g (69.33 mmol) THF wurden bei Raumtemperatur 16.4 ml (43.95 mmol) einer 2.68 molaren BuLi-Lösung in Toluol innerhalb 20 min. langsam zugetropft. Die hellgelbe Suspension wurde auf 60°C erwärmt,1h gerührt und auf Raumtemperatur gekühlt.
E) Synthese von Me₂Si(2-Me-4-Ph-ind)₂Zr(bip)
Zu der Me₂Si(2-Me-4-Ph-ind)₂Li₂ -Suspension aus Teilschritt D) wurde bei Raumtemperatur die Suspension aus C) mittels Kanüle unter Stickstoff zugegeben. Nach vollständiger Zugabe färbte sich die Suspension gelb-orange. Die Reaktionsmischung wurde 12h bei Raumtemperatur gerührt. Ein ¹H-NMR-Spektrum der Reaktion zeigte ein rac-meso-Verhältnis von ca. 1:1. Die Suspension wurde 9h auf 85°C erwärmt. Die ¹H-NMR-Spektroskopische Untersuchung der Rohmischung zeigte ein rac-meso-Verhältnis von ca. 15:1 ohne Anzeichen von Verunreinigungen oder Zersetzungsprodukten. Die Suspension wurde filtriert, der weiße Niederschlag mit wenig Toluol gewaschen und die vereinigten Filtrate unter Hochvakuum auf ca. 1/4 eingeengt. Nach einigen Tagen bildete sich ein orangener kristalliner Niederschlag, der durch Filtration und anschließender Trocknung isoliert wurde. Es wurden 8 g (39.5 %) rein racemisches Me₂Si(2-Me-4-Ph-ind)₂Zr(bip) erhalten. Durch analoges Vorgehen (mehrfaches kristallisieren) wurden insgesamt 17.1g (85 %) rein racemisches Me₂Si(2-Me-4-Ph-ind)₂Zr(bip) erhalten.
Elementaranalyse Me₂Si(2-Me-4-Ph-ind)₂Zr(3,3'-5,5'-tetrat-Bu-1,1'-bi-2-Phenol)
Gefunden C: 77,0 %; H: 7.4. berechnet 77,0 %; H 7.3%
1H-NMR-Spektrum in C₆D₆ siehe Tabelle C.

**Tabelle C**

| 1H-NMR-shifts für Komplex (in ppm, C₆D₆ 25°C, 200 MHz) | |
|---|---|
| | Anordnung |
| 7.78 (d, 2H) | H (aromatisch) |
| 7.44 (d, 2H) | C₆H₂O (bip) |
| 7.34-6.96 (m, 14H) | H (aromatisch) |
| 6.49 (d, 2H) | C₆H₂O (bip) |
| 6.36 (s, 2H) | C₅H |
| 2.27 (s, 6H) | CH₃ |
| 1.32, (s, 18H) . | C(CH₃)₃ |
| 1.25 (s, 18H) | C(CH₃)₃ |
| 0.99 (s, 6H) | Me₂Si |

### Beispiel 3

### Synthese von Me₂Si(2-Me-4-(4-^{t}Bu-Ph)-ind)₂Zr(3,3'-5,5'-tetra-^{t}Bu-1,1'-bi-2-phenolat)

### Me₂Si(2-Me-4- (4-^{t}Bu-Ph)-ind)₂Zr(bip)

A) Synthese von ZrCl₄(THF)₂
Zu einer Suspension von 5.45 g ( 23.38 mmol)ZrCl₄ in 100 ml Toluol wurden bei 0°C (Eisbadkühlung) 3.8g (52.7 mmol) THF innerhalb 15 min. langsam zugetropft. Die Suspension wurde auf Raumtemperatur erwärmt und 1 h gerührt.
B) Synthese von (3,3'-5,5'-tetra-^{t}Bu-1,1'-bi-2-phenolat)Li₂
Zu einer Lösung von 9.6g (23.38 mmol) 3,3'-5,5'-tetra-^{t}Bu-1,1'-bi-2-phenol in 130 ml Toluol und 3.8 g (52.7 mmol) THF wurden bei 0°C (Eisbadkühlung) 18.3 ml ( 49.1 mmol) einer 2.68 molaren BuLi-Lösung in Toluol innerhalb 20 min. langsam zugetropft. Die klare hellgelbe Lösung wurde auf Raumtemperatur erwärmt und 1 h gerührt.
C) Synthese von Cl₂Zr(3,3'-5,5'-tetra-^{t}Bu-1,1'-bi-2-phenolat) (THF) ₂
Zu der ZrCl₄(THF)₂-Suspension aus Teilreaktion A) wurde unter Stickstoff mittels Kanüle die Lithiumbiphenolatlösung aus Teilreaktion B) zugegeben. Verbleibende Reste im Kolben wurden mit 10 ml Toluol nachgespült. Die Suspension wird 4h bei Raumtemperatur gerührt.
D) Synthese von Me₂Si(2-Me-4-(4'-^{t}Bu-Ph)-ind)₂Li₂
Zu einer Lösung von 13.0 g (22.38 mmol) Me₂Si(2-Me-4-(4'-^{t}Bu-Ph)-indH)₂ in 150 ml Toluol und 6 g (83.20 mmol) THF wurden bei Raumtemperatur 17.5 ml (46.9 mmol) ) einer 2.68 molaren BuLi-Lösung in Toluol innerhalb 20 min. langsam zugetropft Die hellgelbe Suspension wurde auf 60°C erwärmt, 1h gerührt und auf Raumtemperatur gekühlt.
E) Synthese von Me₂Si(2-Me-4-(4'-^{t}Bu-Ph)-ind)₂Zr(bip)
Zu der Me₂Si(2-Me-4-(4'-^{t}Bu-Ph)-ind)₂Li₂ -Suspension aus Teilschritt D) wurde bei Raumtemperatur die Suspension aus C) mittels Kanüle unter Stickstoff zugegeben. Nach vollständiger Zugabe färbte sich die Suspension gelblich. Die Reaktionsmischung wurde 12h bei Raumtemperatur gerührt. Ein ¹H-NMR-Spektrum der Reaktion zeigte ein rac-meso-Verhältnis von ca. 1:2. Die Suspension wurde 9h auf 85°C erwärmt. Die ¹H-NMR-Spektroskopische Untersuchung der Rohmischung zeigte ein rac-meso-Verhältnis von ca. 15:1 ohne Anzeichen von Verunreinigungen oder Zersetzungsprodukten. Die Suspension wurde filtriert, der weiße Niederschlag mit wenig Toluol gewaschen und die vereinigten Filtrate unter Hochvakuum auf ca. 1/4 eingeengt. Durch mehrmaliges kristallisieren bei Raumtemperatur, Filtration und Trocknung wurden insgesamt 21.1g (88%) rein racemisches Me₂Si(2-Me-4-(4'-t-Bu-Ph-ind)₂Zr(bip) erhalten.
Me₂Si(2-Me-4-(4'-t-Bu-PH)₂Zr(3,3'-5,5'-tetratt-Bu-1,1'-bi-2-Phenol)
¹H-NMR-Verschiebungen (in ppm, C₆D₆ 25°C, 200 MHz)

| | |
|---|---|
| 7.76 (m, 4H) | H_{arom.} |
| 7.76 (m, 4H) | H_{arom.} |
| 7.47 (d, 2H) | C₆H₂ (Biphenol) |
| 7.35-6.95 (m, 10H) | Harom. |
| 6.56 (d, 2H) | C₆H₂ (Biphenol) |
| 6.34 (s, 2H) | C₅H |
| 2.26 (s, 6H) | CH₃ |
| 1.33 (s, 18H) | (CH₃)₃C |
| 1.28 (s, 18H) | (CH₃)₃C |
| 1.27 (s, 18H) | (CH₃)₃C |
| 0,99 (s, 6H) | Me₂Si |

### Beispiel bei dem man rac-Selektivität durch Zugabe von Radikalquellen und Erhitzen erreicht (Isomerisierung)

### Beispiel 4) Synthese von rac-Me₂Si(2-Me-benz[e]ind)₂Zr(bip) (5C)

0.89g (2.10 mmol) Me₂Si(2-Me-benz[e]ind)₂Li₂ und 1.50g (2.10 mmol) Cl₂(THF)₂Zr(bip) wurden trocken vermischt und ca. 15 ml eines 10:1 Gemisches Toluol/THF (Volumenverhältnis) zugegeben. Die Reaktionsmischung wurde 12 h bei Raumtemperatur gerührt. Hierbei bildete sich eine orange-farbene Lösung und ein weißer Niederschlag. (LiCl). Das ¹H-NMR-Spektrum der Rohmischung zeigte ein Isomerenverhaeltnis von ca. 1:1. Die Reaktionsmischung wurde filtriert. Zum Filtrat wurden bei Raumtemperatur 0.30g (1.92 mmol) TEMPO hinzugegeben und die Reaktionsmischung 1 h auf 75°C erwärmt. Das ¹H-NMR-Spektrum der Rohmischung zeigte rein racemisches Me₂Si(2-Me-benz[e]ind)₂Zr(bip). Durch Einengen der Lösung am Hochvakuum und mehrfaches kristallisieren bei Raumtemperatur wurden insgesamt 1.6g, (1.76 mmol; 84%) rac-Me₂Si(2-Mebenz[e]ind)₂Zr(bip) erhalten.
1H-NMR-Spektrum in CDCl₃ siehe Tabelle E. 13C-NMR-Spektrum in CDCl₃ (25°C, 600 MHz 158.1, 139.1, 133.3, 133.1, 131.8, 131.6, 130.1, 128.9, 128.2, 127.6, 127.2, 126.4, 125.6, 124.1, 124.0, 121.2, 110.8, 97.3, 35.3, 34.0, 33.1, 31.8, 19.1, 2.9.. Das Massenspektrum (EI-MS/ 70eV) zeigt Molekularionenpeak bei m/e 906-915 mit der typischen Isotopenverteilung. Elementaranalyse Gefunden: C 75.9 9% ; H 7.09 %; Zr 9.83.berechnet C 76.18 %; H 7.27 %; Zr 9.97 %.

**Tabelle E**

| 1H-NMR-shifts für Komplex rac-5C (in ppm, CDCl₃, 25°C, 600 MHz) | | | |
|---|---|---|---|
| | | | Zuordnung^{a} |
| 7.62 | (d, 2H) | ³J (8.5 Hz) | C₁₃H₇ (H8/9, H8'/9') |
| 7.47 | (d, 2H) | ³J (7.8 Hz) | C₁₃H₇ (H7, H7') |
| 7.19 | (d, 2H) | ³J (8.5 Hz) | C₁₃H₇ (H8/9, H8'/9') |
| 7.11 | (d, 2H) | ⁴J (2.5 Hz) | C₆H₂ (H4/6, H4'/6') |
| 7.10 | (dd, 2H) | ³J (7.8 Hz) ³J (7.3 Hz) | C₁₃H₇ (H6, H6') |
| 6.95 | (dd, 2H) | 3J (7.9 Hz) ³J (7.3 Hz) | C₁₃H₇ (H5, H5') |
| 6.65 | (d, 2H) | ³J (7.9 Hz) | C₁₃H₇ (H4, H4') |
| 6.34 | (s, 2H) | | C₁₃H₇ (H3, H3') |
| 6.24 | (d, 2H) | ⁴J (2.5 Hz) | C₆H₂ (H4/6, H4'/6') |
| 2.63 | (s, 6H) | | (2-CH₃-C₁₃H₇) |
| 1.38 | (s, 6H) | | (CH₃)₂Si |
| 1.28, | 1.02 (s, 18H) | | (CH₃)₃C |

| | | | |
|---|---|---|---|
| ^{a} Zuordnung durch 1H-NMR-ROESY-Technik | | | |

### Beispiele zur Abspaltung von Phenolaten an ansa-Metallocenbisphenolatkomplexen

### Beispiel 5

Darstellung von Me₂Si(2-Me-benz[e]ind)₂ZrCl₂ durch Umsetzung von Me₂Si(2-Me-benz[e]ind)₂Zr(3,5-Me₂-OC₆H₃)₂ mit CH₃COCl.

Zu einer Lösung von 2.8 g (3.74 mmol) rac-Me₂Si(2-Mebenz[e]ind)₂Zr (3,5-Me₂-OC₆H₃)₂ in 48 g Toluol und 0.6 g (8.3 mmol) THF wurden bei Raumtemperatur 0.63 g (8.02 mmol) Acetylchlorid in 13 g Toluol bei Raumtremperatur zugetropft. Die Lösung wurde 2 Tage bei Raumtemperatur gerührt. Die leicht orangene Lösung färbte sich zunehmend gelb. Nach einigen Stunden ist die Bildung eines hellgelben kristallinen Niederschlages zu beobachten. Das ¹H-NMR-Spektrum zeigte neben den Resonanzen des 3,5-Me₂-Phenolmethylesters Signale rein racemischen Me₂Si(2-Me-benz[e]ind)₂ZrCl₂. Der hellgelbe kristalline Niederschlag wurde durch Filtration isoliert, mit wenig Toluol gewaschen und im Hochvakuum getrocknet. Hierbei werden 1.97 g (3.42 mmol) (92%) rein racemisches Me₂Si(2-Me-benz[e]ind)₂ZrCl₂ analysenrein erhalten.

Darstellung von Me₂Si(2-Me-benz[e]ind)₂Zr(3,5-Me₂-OC₆H₃)Cl durch Umsetzung von Me₂Si(2-Me-benz[e]ind)₂Zr(3,5-Me₂-OC₆H₃)₂ mit CH₃COCl.

Zu einer Lösung von 2.5 g (3.34 mmol) rac-Me₂Si(2-Mebenz[e]ind)₂Zr (3,5-Me2-OC₆H₃)₂ in 60 g Toluol und 0.25 g (3.4 mmol) THF wurden bei Raumtemperatur 0.26 g ( 3.34 mmol) Acetylchlorid in 10 g Toluol bei Raumtemperatur zugetropft. Die Lösung wurde 2 Tage bei Raumtemperatur gerührt. Die leicht orangene Lösung färbte sich zunehmend gelb. Das ¹H-NMR-Spektrum zeigte neben den Resonanzen des 3,5-Me₂-Phenolmethylesters Signale rein racemischen Me₂Si(2-Me-benz[e]ind)₂Zr(3,5-Me₂-OC₆H₃)Cl. Die Lösung wurde am Hochvakuum auf ca 1/4 eingeengt. Nach einigen Tagen bildete sich ein hellgelber kristalliner Niederschlag der filtriert, mit wenig Toluol gewaschen und im Hochvakuum getrocknet wurde, hierdurch wurden 2.0g (90 %) rein racemisches Me₂Si(2-Mebenz[e]ind)₂Zr(3,5- Me₂-OC₆H₃)Cl analysenrein erhalten.
Elementaranalyse Me₂Si(Me-benz][e]ind)₂ZrCl(3,5-die-Me-Phenolat) Gefunden C: 67.5 %; H: 5.3. berechnet C 68,8 %; H 5.3 %
Me₂Si(2-Me-benz[e]ind)₂ZrCl(3,5-di-Me-Phenolat)
¹H-NMR-Verschiebungen (in ppm, CDCl₃, 25°C, 200 MHz)

| | |
|---|---|
| 7.90 (d, 1H) | H_{arom.} |
| 7.78 (d, 1H) | H_{arom.} |
| 7.70-6.88 (11m, H) | H_{arom.} |
| 6.69 (s, 1H) | C₅H oder C₆H₃ (4-Position Phenolat) |
| 6.33 (s, 1H) | C₅H oder C₆H₃ (4-Position Phenolat) |
| 5.81 (s, 2H) | C₆H₃ (2,6-Position Phenolat) |
| 2.29 (s, 3H) | CH₃ |
| 2.20 (s, 3H) | CH₃ |
| 2.12 (s, 6H) | 3,5-(CH₃)₂(Phenolat) |
| 0.95 (s, 3H) | Me₂Si |
| 0,89 (s, 3H) | Me₂Si |

## Patentansprüche

1. Verfahren zur Herstellung von racemischen Metallocenkomplexen durch Umsetzung von verbrückten oder nicht-verbrückten Übergangsmetallaromatkomplexen der allgemeinen Formel I 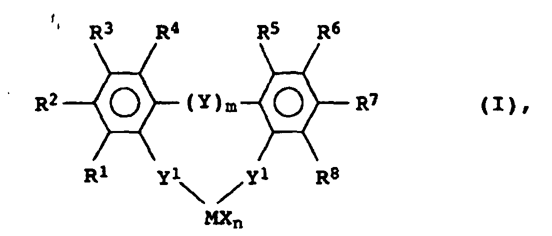 in der die Substituenten und Indizes folgende Bedeutung haben:
M Titan, Zirkonium, Hafnium, Vanadium, Niob, Tantal, Chrom, Molybdän, Wolfram, sowie Elemente der III. Nebengruppe des Periodensystems und der Lanthanoiden,
X gleich oder verschieden Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
n eine ganze Zahl zwischen 1 und 4, wobei n der Wertigkeit von M minus der Zahl 2 entspricht,
R¹, R⁸ gleich oder verschieden Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R9 gleich oder verschieden C₁- bis C₂₀-Alkyl, C₃- bis C₁₀-Cycloalkyl, C₆- bis C₁₅-Aryl, wobei die genannten Reste teilweise oder vollständig mit Heteroatomen substituiert sein können,
- OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
R² bis R⁷ gleich oder verschieden Wasserstoff, C₁- bis C₂₀-Alkyl, 3- bis 8-gliedriges Cycloalkyl - das seinerseits ein C₁- bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen, und die genannten Reste können vollständig oder teilweise mit Heteroatomen substituiert sein,
- OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
R¹⁰, R¹¹ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
Y, Y¹ gleich oder verschieden 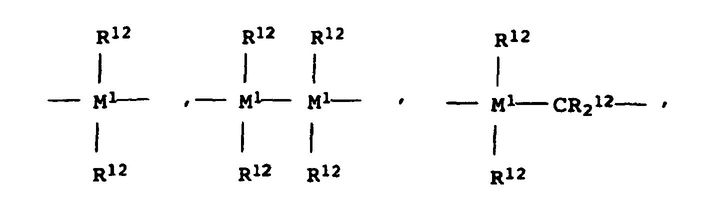 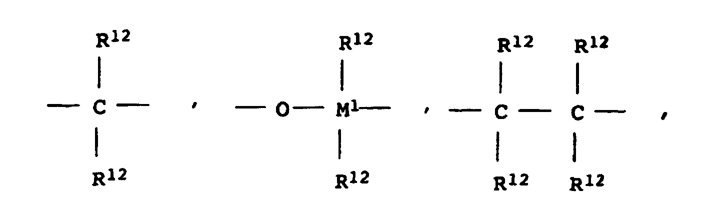 -B(R¹²)-, -Al(R¹²)-, -Ge-, -Sn-, -O-, -S-, -S(O)-, -S(O)₂-, -N(R¹²)-, -C(O)-,- P(R¹²)- oder -P(O)(R¹²)-,
wobei
R¹² gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
M¹ Silicium, Germanium oder Zinn ist und
m 0, 1, 2, 3 bedeutet,
oder Y nicht-verbrückend ist und für zwei Reste R' und R" steht, wobei
R' und R" gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können, -OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl
mit Cyclopentadienylderivaten von Alkali- oder Erdalkalimetallen, Erwärmen des so erhaltenen Reaktionsgemisches auf eine Temperatur im Bereich von -78 bis 250°C, gegebenenfalls unter Zusatz von Radikalen oder Radikalbildnern und gegebenenfalls anschließende Substitution des verbrückten phenolischen Liganden oder der beiden nicht verbrückten phenolischen Liganden zum Mono- oder Bisubstitutionsprodukt.

2. Verfahren nach Anspruch 1, wobei R¹ und R⁸ in Formel I sperrige Substituenten sind.

3. Verfahren nach den Ansprüchen 1 bis 2, wobei m in Formel I 0 bedeutet.

4. Verfahren nach den Ansprüchen 1 bis 3, wobei Y¹ gleich ist und Sauerstoff bedeutet.

5. Verfahren nach den Ansprüchen 1 bis 4, wobei Cyclopentadienylderivate des Magnesiums oder des Lithiums verwendet werden.

6. Verfahren nach Anspruch 1, worin R¹, R³, R' und R⁶, R⁸, R" Wasserstoff bedeuten und R², R⁴ und R⁵, R⁷ die in Anspruch 1 genannte Bedeutung, jedoch nicht Wasserstoff, haben.

7. Racemische Metallocenkomplexe der allgemeinen Formel III 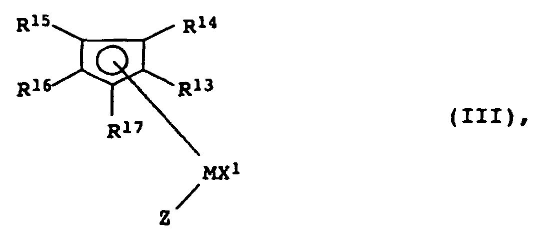 in der die Substituenten und Indizes folgende Bedeutung haben:
M Titan, Zirkonium, Hafnium, Vanadium, Niob, Tantal, Chrom, Molybdän, Wolfram, sowie Elemente der III. Nebengruppe des Periodensystems und der Lanthanoiden,
X¹ 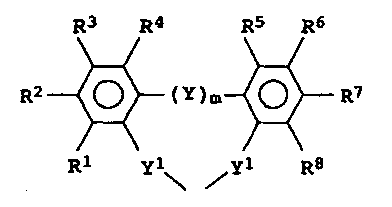
wobei:
R¹, R⁸ gleich oder verschieden Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
wobei die genannten Reste teilweise oder vollständig mit Heteroatomen substituiert sein können,
-OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl,
R² bis R⁷ gleich oder verschieden Wasserstoff, C₁- bis C₂₀-Alkyl, 3- bis 8-gliedriges Cycloalkyl - das seinerseits ein C₁- bis C₁₀-Alkylrest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen im Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl,
benachbarte Reste R² bis R⁷ können für 4 bis 15 C-Atome aufweisende gesättigte, teilweise gesättigte oder für ungesättigte cyclische Gruppen stehen und die genannten Reste können vollständig oder teilweise mit Heteroatomen substituiert sein, -OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl,
Y, Y¹ gleich oder verschieden 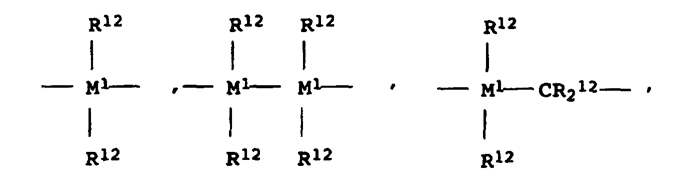 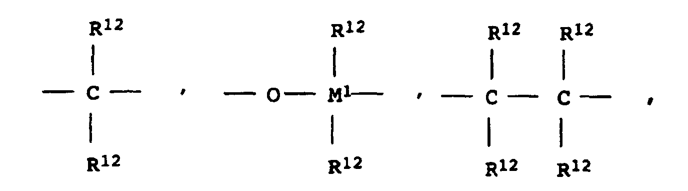 - B(R¹²)-, -Al(R¹²)-, -Ge-, -Sn-, -O-, -S-, = - S(O)-, -S(O)₂-, -N(R¹²)-, -C(O)-, -P(R¹²)- oder -P(O)(R¹²)-
wobei
R¹² gleich oder verschieden Wasserstoff, Halogen, C₁-C₁₀-Alkyl, C₁-C₁₀-Fluoralkyl, C₆-C₁₀-Fluoraryl, C₆-C₁₀-Aryl, C₁-C₁₀-Alkoxy, C₂-C₁₀-Alkenyl, C₇-C₄₀-Arylalkyl, C₈-C₄₀-Arylalkenyl, C₇-C₄₀-Alkylaryl bedeuten, oder wobei zwei Reste R¹² mit den sie verbindenden Atomen einen Ring bilden,
M¹ Silicium, Germanium oder Zinn ist und
m 0, 1, 2, 3 bedeutet,
oder Y nicht-verbrückend ist und für zwei Reste R' und R" steht, wobei
R' und R" gleich oder verschieden sind und für Wasserstoff, Fluor, Chlor, Brom, Iod, C₁- bis C₂₀-Alkyl, 3- bis 8-gliedriges Cycloalkyl - das seinerseits ein C₁- bis C₁₀-Alkyl als Rest tragen kann -, C₆- bis C₁₅-Aryl, Alkylaryl mit 1 bis 10 C-Atomen im Alkylrest und 6 bis 20 C-Atomen im Arylrest, Arylalkyl mit 1 bis 10 C-Atomen in Alkylrest und 6 bis 20 C-Atomen im Arylrest, Si(R⁹)₃ mit R⁹ gleich oder verschieden C₁- bis C₂₀-Alkyl, C₃- bis C₁₀-Cycloalkyl, C₆- bis C₁₅-Aryl, oder zusammen mit benachbarten Resten R⁴ oder R⁵ für 4 bis 15 C-Atome aufweisende gesättigte, teilweise gesättigte oder für ungesättigte cyclische Gruppen stehen, und die genannten Rest vollständig oder teilweise mit Heteroatomen substituiert sein können,
-OR²⁷, -SR²⁷, -N(R²⁷)₂, -P(R²⁷)₂, mit R²⁷, gleich oder verschieden, C₁- bis C₁₀-Alkyl, C₆- bis C₁₅-Aryl, C₃- bis C₁₀-Cycloalkyl, Alkylaryl oder Si(R²⁸)₃ mit R²⁸, gleich oder verschieden, C₁- bis C₁₀-Alkyl, C₆- bis C₁₅-Aryl, C₃- bis C₁₀-Cycloalkyl, Alkylaryl,
R¹³ bis R¹⁷ gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl, wobei benachbarte Reste gemeinsam für 4 bis 15 C-Atome aufweisende cyclische Gruppen stehen können, oder Si(R¹⁸)₃ mit
R¹⁸ gleich oder verschieden C₁- bis C₁₀-Alkyl, C₆- bis C₁₅-Aryl oder C₃- bis C₁₀-Cycloalkyl,
Z für 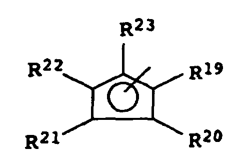 steht,
wobei die Reste
R¹⁹ bis R²³ gleich oder verschieden Wasserstoff, C₁- bis C₂₀-Alkyl, 5- bis 7-gliedriges Cycloalkyl, - das seinerseits ein C₁- bis C₁₀-Alkyl als Substituent tragen kann -, C₆- bis C₁₅-Aryl oder Arylalkyl bedeuten, wobei benachbarte Reste gemeinsam für 4 bis 15 C-Atome aufweisende cyclische Gruppen stehen können, oder Si(R²⁴)₃ mit
R²⁴ gleich oder verschieden C₁- bis C₁₀-Alkyl, C₆- bis C₁₅-Aryl oder C₃- bis C₁₀-Cycloalkyl,
oder wobei die Reste
R¹⁶ und Z gemeinsam eine Gruppierung -[T(R²⁵)(R²⁶)]_{q}-E-bilden, in der
T gleich oder verschieden sein kann und für Silicium, Germanium, Zinn oder Kohlenstoff steht,
R²⁵, R²⁶ für Wasserstoff, C₁- bis C₁₀-Alkyl, C₃- bis C₁₀-Cycloalkyl oder C₆- bis C₁₅-Aryl
q für die Zahlen 1, 2, 3 oder 4,
E für 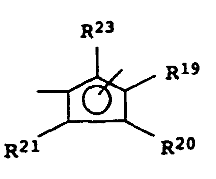 oder A steht, wobei A ―O―, ―S―, 〉NR²⁷ oder 〉PR²⁷ bedeutet,
mit R²⁷ gleich oder verschieden C₁- bis C₁₀-Alkyl, C₆- bis C₁₅-Aryl, C₃- bis C₁₀-Cycloalkyl, Alkylaryl oder Si(R²⁸)₃
mit R²⁸ gleich oder verschieden C₁- bis C₁₀-Alkyl, C₆- bis C₁₅-Aryl, C₃- bis C₁₀-Cycloalkyl oder Alkylaryl.

8. Racemische Metallocenkomplexe nach Anspruch 7, wobei R¹⁷ und R²³ nicht Wasserstoff bedeuten, wenn R¹⁶ und Z gemeinsam eine Gruppierung -[T(R²⁵)(R²⁶)]_{q}-E- bilden.

9. Racemische Metallocenkomplexe erhältlich nach dem Verfahren gemäß Anspruch 6.

10. rac-Me₂Si(2-Me-benz[e]ind)₂Zr(3,5-Me₂-OC₆H₃)₂·

11. Verwendung von racemischen Metallocenkomplexen gemäß den Ansprüchen 7 bis 10 als Katalysatoren oder als Bestandteil von Katalysatoren für die Polymerisation von olefinisch ungesättigten Verbindungen oder als Reagenzien oder Katalysatoren in der stereoselektiven Synthese.

## Claims

1. A process for preparing racemic metallocene complexes by reacting bridged or unbridged transition metal-aromatic complexes of the formula I 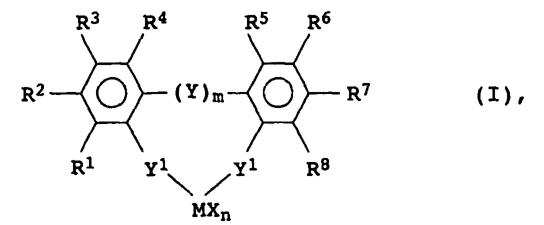 where the substituents and indices have the following meanings:
M is titanium, zirconium, hafnium, vanadium, niobium, tantalum, chromium, molybdenum, tungsten or an element of transition group III of the Periodic Table or a lanthanide,
X are identical or different and are each fluorine, chlorine, bromine, iodine, hydrogen, C₁-C₁₀-alkyl, C₆-C₁₅-aryl, alkylaryl having from 1 to 10 carbon atoms in the alkyl part and from 6 to 20 carbon atoms in the aryl part, -OR¹⁰ or -NR¹⁰R¹¹,
n is an integer from 1 to 4, where n corresponds to the valence of M minus 2,
R¹, R⁸ are identical or different and are each hydrogen, fluorine, chlorine, bromine, iodine, C₁-C₂₀-alkyl, 3- to 8-membered cycloalkyl which may in turn bear a C₁-C₁₀-alkyl group as substituent, C₆-C₁₅-aryl, alkylaryl having from 1 to 10 carbon atoms in the alkyl part and from 6 to 20 carbon atoms in the aryl part, arylalkyl having from 1 to 10 carbon atoms in the alkyl part and from 6 to 20 carbon atoms in the aryl part, Si(R⁹)₃ where R⁹ are identical or different and are each C₁-C₂₀-alkyl, C₃-C₁₀-cycloalkyl, C₆-C₁₅-aryl,
where the radicals mentioned may be partially or fully substituted by heteroatoms,
-OR²⁷, -SR²⁷, -N(R²⁷)₂, -P(R²⁷)₂, where R²⁷ are identical or different and are each C₁-C₁₀-alkyl, C₆-C₁₅-aryl, C₃-C₁₀-cycloalkyl, alkylaryl or Si(R²⁸)₃ where R²⁸ are identical or different and are each C₁-C₁₀-alkyl, C₆-C₁₅-aryl, C₃-C₁₀-cycloalkyl, alkylaryl
R² to R⁷ are identical or different and are each hydrogen, C₁-C₂₀-alkyl, 3- to 8-membered cycloalkyl which may in turn bear a C₁-C₁₀-alkyl radical as substituent, C₆-C₁₅-aryl, alkylaryl having from 1 to 10 carbon atoms in the alkyl part and from 6 to 20 carbon atoms in the aryl part, arylalkyl having from 1 to 10 carbon atoms in the alkyl part and from 6 to 20 carbon atoms in the aryl part, Si(R⁹)₃ where R⁹ are identical or different and are each C₁-C₂₀-alkyl, C₃-C₁₀-cycloalkyl, C₆-C₁₅-aryl,
where adjacent radicals R² to R⁷ may form saturated, partially saturated or unsaturated cyclic groups having from 4 to 15 carbon atoms, and the radicals mentioned may be fully or partially substituted by heteroatoms,
-OR²⁷, -SR²⁷, -N(R²⁷)₂, -P(R²⁷)₂, where R²⁷ are identical or different and are each C₁-C₁₀-alkyl, C₆-C₁₅-aryl, C₃-C₁₀-cycloalkyl, alkylaryl or Si(R²⁸)₃ where R²⁸ are identical or different and are each C₁-C₁₀-alkyl, C₆-C₁₅-aryl, C₃-C₁₀-cycloalkyl, alkylaryl
R¹⁰, R¹¹ are each C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
Y, Y¹ are identical or different and are each 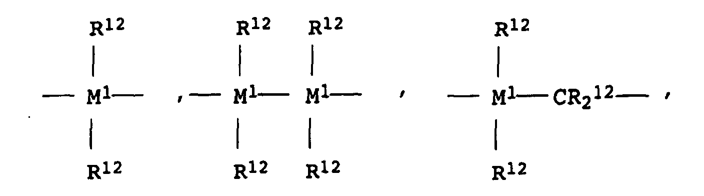 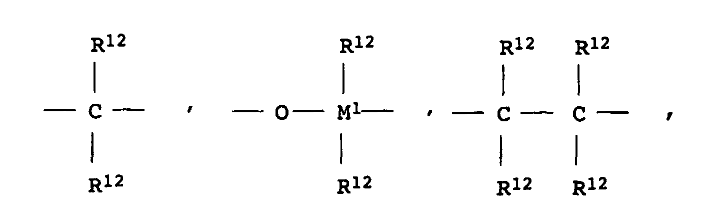 -B(R¹²)-, -Al(R¹²)-, -Ge-, -Sn-, -O-, -S-, - S(O)-, -S(O)₂-, -N(R¹²)-, -C(O)-, -P(R¹²)- or -P(O)(R¹²)-,
where
R¹² are identical or different and are each hydrogen, halogen, C₁-C₁₀-alkyl, C₁-C₁₀-fluoroalkyl, C₆-C₁₀-fluoroaryl, C₆-C₁₀-aryl, C₁-C₁₀-alkoxy, C₂-C₁₀-alkenyl, C₇-C₄₀-arylalkyl, C₈-C₄₀-arylalkenyl, C₇-C₄₀-alkylaryl, or two radicals R¹² together with the atoms connecting them form a ring,
M¹ is silicon, germanium or tin and
m is 0, 1, 2, 3,
or Y is nonbridging and represents two radicals R' and R", where
R' and R" are identical or different and are each hydrogen, fluorine, chlorine, bromine, iodine, C₁-C₂₀-alkyl, 3- to 8-membered cycloalkyl which may in turn bear a C₁-C₁₀-alkyl group as substituent, C₆-C₁₅-aryl, alkylaryl having from 1 to 10 carbon atoms in the alkyl part and from 6 to 20 carbon atoms in the aryl part, arylalkyl having from 1 to 10 carbon atoms in the alkyl part and from 6 to 20 carbon atoms in the aryl part, Si(R⁹)₃ where R⁹ are identical or different and are each C₁-C₂₀-alkyl, C₃-C₁₀-cycloalkyl, C₆-C₁₅-aryl or together with adjacent radicals R⁴ or R⁵ form saturated, partially saturated or unsaturated cyclic groups having from 4 to 15 carbon atoms, and the radicals mentioned may be fully or partially substituted by heteroatoms, - OR²⁷, -SR²⁷, -N(R²⁷)₂, -P(R²⁷)₂, where R²⁷ are identical or different and are each C₁-C₁₀-alkyl, C₆-C₁₅-aryl, C₃-C₁₀-cycloalkyl, alkylaryl or Si(R²⁸)₃ where R²⁸ are identical or different and are each C₁-C₁₀-alkyl, C₆-C₁₅-aryl, C₃-C₁₀-cycloalkyl, alkylaryl
with cyclopentadienyl derivatives of alkali metals or alkaline earth metals, heating the reaction mixture obtained in this way to from -78 to 250°C, with or without addition of free radicals or free radical formers, and, if desired, subsequently replacing the bridged phenolic ligand or the two unbridged phenolic ligands to form the monosubstitution or disubstitution product.

2. A process as claimed in claim 1, wherein R¹ and R⁸ in formula I are bulky substituents.

3. A process as claimed in claim 1 or 2, wherein m in formula I is 0.

4. A process as claimed in any of claims 1 to 3, wherein Y¹ are identical and are each oxygen.

5. A process as claimed in any of claims 1 to 4, wherein cyclopentadienyl derivatives of magnesium or lithium are used.

6. A process as claimed in claim 1, wherein R¹, R³, R' and R⁶, R⁸, R" are hydrogen and R², R⁴ and R⁵, R⁷ are as defined in claim 1 but are not hydrogen.

7. A racemic metallocene complex of the formula III 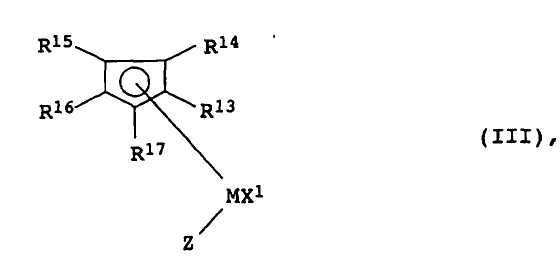 where the substituents and indices have the following meanings:
M is titanium, zirconium, hafnium, vanadium, niobium, tantalum, chromium, molybdenum, tungsten or an element of transition group III of the Periodic Table or a lanthanide,
X¹ is 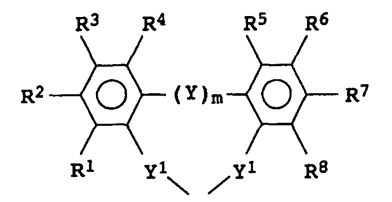
where:
R¹, R⁸ are identical or different and are each fluorine, chlorine, bromine, iodine, C₁-C₂₀-alkyl, 3- to 8-membered cycloalkyl which may in turn bear a C₁-C₁₀-alkyl group as substituent, C₆-C₁₅-aryl, alkylaryl having from 1 to 10 carbon atoms in the alkyl part and from 6 to 20 carbon atoms in the aryl part, arylalkyl having from 1 to 10 carbon atoms in the alkyl part and from 6 to 20 carbon atoms in the aryl part, Si(R⁹)₃ where R⁹ are identical or different and are each C₁-C₂₀-alkyl, C₃-C₁₀-cycloalkyl, C₆-C₁₅-aryl,
where the radicals mentioned may be partially or fully substituted by heteroatoms,
- OR²⁷, -SR²⁷, -N(R²⁷)₂, -P(R²⁷)₂, where R²⁷ are identical or different and are each C₁-C₁₀-alkyl, C₆-C₁₅-aryl, C₃-C₁₀-cycloalkyl, alkylaryl or Si(R²⁸)₃ where R²⁸ are identical or different and are each C₁-C₁₀-alkyl, C₆-C₁₅-aryl, C₃-C₁₀-cycloalkyl, alkylaryl,
R² to R⁷ are identical or different and are each hydrogen, C₁-C₂₀-alkyl, 3-to 8-membered cycloalkyl which may in turn bear a C₁-C₁₀-alkyl radical as substituent, C₆-C₁₅-aryl, alkylaryl having from 1 to 10 carbon atoms in the alkyl part and from 6 to 20 carbon atoms in the aryl part, arylalkyl having from 1 to 10 carbon atoms in the alkyl part and from 6 to 20 carbon atoms in the aryl part, Si(R⁹)₃ where R⁹ are identical or different and are each C₁-C₂₀-alkyl, C₃-C₁₀-cycloalkyl, C₆-C₁₅-aryl,
adjacent radicals R² to R⁷ and may form saturated, partially saturated or unsaturated cyclic groups having from 4 to 15 carbon atoms, and the radicals mentioned may be fully or partially substituted by heteroatoms, -OR²⁷, - SR²⁷, -N(R²⁷)₂, -P(R²⁷)₂, where R²⁷ are identical or different and are each C₁-C₁₀-alkyl, C₆-C₁₅-aryl, C₃-C₁₀-cycloalkyl, alkylaryl or Si(R²⁸)₃ where R²⁸ are identical or different and are each C₁-C₁₀-alkyl, C₆-C₁₅-aryl, C₃-C₁₀-cycloalkyl, alkylaryl,
Y, Y¹ are identical or different and are each 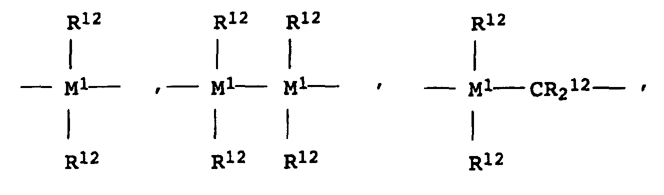 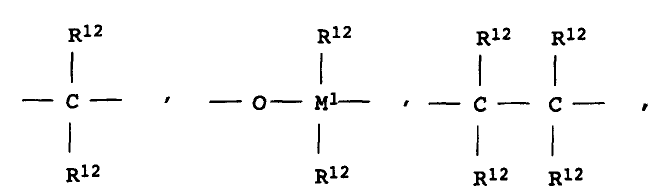 - B(R¹²)-, -Al(R¹²)-, -Ge-, -Sn-, -O-, -S-, = -S(O)-, -S(O)₂-, -N(R¹²)-, -C(O)-, -P(R¹²)- or -P(O)(R¹²)-,
where
R¹² are identical or different and are each hydrogen, halogen, C₁-C₁₀-alkyl, C₁-C₁₀-fluoroalkyl, C₆-C₁₀-fluoroaryl, C₆-C₁₀-aryl, C₁-C₁₀-alkoxy, C₂-C₁₀-alkenyl, C₇-C₄₀-arylalkyl, C₈-C₄₀-arylalkenyl, C₇-C₄₀-alkylaryl, or two radicals R¹² together with the atoms connecting them form a ring,
M¹ is silicon, germanium or tin and
m is 0, 1, 2, 3,
or Y is nonbridging and represents two radicals R' and R", where
R' and R" are identical or different and are each hydrogen, fluorine, chlorine, bromine, iodine, C₁-C₂₀-alkyl, 3- to 8-membered cycloalkyl which may in turn bear a C₁-C₁₀-alkyl group as substituent, C₆-C₁₅-aryl, alkylaryl having from 1 to 10 carbon atoms in the alkyl part and from 6 to 20 carbon atoms in the aryl part, arylalkyl having from 1 to 10 carbon atoms in the alkyl part and from 6 to 20 carbon atoms in the aryl part, Si(R⁹)₃ where R⁹ are identical or different and are each C₁-C₂₀-alkyl, C₃-C₁₀-cycloalkyl, C₆-C₁₅-aryl or together with adjacent radicals R⁴ or R⁵ form saturated, partially saturated or unsaturated cyclic groups having from 4 to 15 carbon atoms, and the radicals mentioned may be fully or partially substituted by heteroatoms, -OR²⁷, -SR²⁷, -N(R²⁷)₂, -P(R²⁷)₂, where R²⁷ are identical or different and are each C₁-C₁₀-alkyl, C₆-C₁₅-aryl, C₃-C₁₀-cycloalkyl, alkylaryl or Si(R²⁸)₃ where R²⁸ are identical or different and are each C₁-C₁₀-alkyl, C₆-C₁₅-aryl, C₃-C₁₀-cycloalkyl, alkylaryl,
R¹³ to R¹⁷ are identical or different and are each hydrogen, C₁-C₂₀-alkyl, 5- to 7-membered cycloalkyl which may in turn bear a C₁-C₁₀-alkyl group as substituent, C₆-C₁₅-aryl or arylalkyl, where adjacent radicals may together form cyclic groups having from 4 to 15 carbon atoms, or Si(R¹⁸)₃ where
R¹⁸ are identical or different and are each C₁-C₁₀-alkyl, C₆-C₁₅-aryl or C₃-C₁₀-cycloalkyl,
Z is 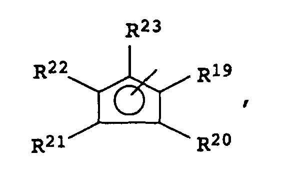
where the radicals
R¹⁹ to R²³ are identical or different and are each hydrogen, C₁-C₂₀-alkyl, 5- to 7-membered cycloalkyl which may in turn bear a C₁-C₁₀-alkyl group as substituent, C₆-C₁₅-aryl or arylalkyl, where adjacent radicals may together form cyclic groups having from 4 to 15 carbon atoms, or Si(R²⁴)₃ where
R²⁴ are identical or different and are each C₁-C₁₀-alkyl, C₆-C₁₅-aryl or C₃-C₁₀-cycloalkyl,
or
R¹⁶ and Z together form a -[T(R²⁵)(R²⁶)]_{q}-E- group in which
T may be identical or different and are each silicon, germanium, tin or carbon,
R²⁵, R²⁶ are each hydrogen, C₁-C₁₀-alkyl, C₃-C₁₀-cycloalkyl or C₆-C₁₅-aryl
q is 1, 2, 3 or 4,
E is 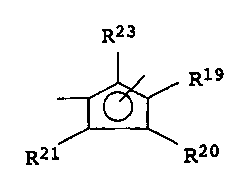 or A, where A is ―O―, ―S―, 〉NR²⁷ or 〉PR²⁷,
where R²⁷ is C₁-C₁₀-alkyl, C₆-C₁₅-aryl, C₃-C₁₀-cycloalkyl, alkylaryl or Si(R²⁸)₃
where R²⁸ are identical or different and are each C₁-C₁₀-alkyl, C₆-C₁₅-aryl, C₃-C₁₀-cycloalkyl or alkylaryl.

8. A racemic metallocene complex as claimed in claim 7, wherein R¹⁷ and R²³ are not hydrogen when R¹⁶ and Z together form a -[T(R²⁵)(R²⁶)]_{q}-E- group.

9. A racemic metallocene complex which can be obtained by the process as claimed in claim 6.

10. rac-Me₂Si(2-Me-benz[e]ind)₂Zr(3,5-Me₂-OC₆H₃)₂.

11. The use of a racemic metallocene complex as claimed in any of claims 7 to 10 as catalyst or as constituent of a catalyst for the polymerization of olefinically unsaturated compounds or as a reagent or catalyst in stereoselective synthesis.

## Revendications

1. Procédé pour la préparation de complexes de métallocène racémiques par réaction de complexes aromatiques de métal de transition pontés ou non-pontés de formule générale I 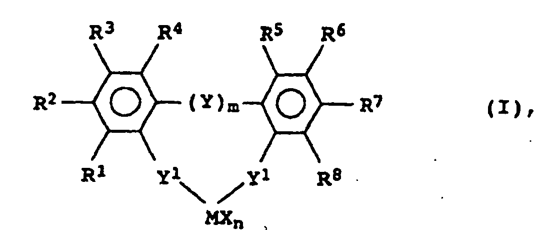 dans laquelle les substituants et indices ont la signification suivante:
M titane, zirconium, hafnium, vanadium, niobium, tantale, chrome, molybdène, tungstène, ainsi que les éléments du sous-groupe III de la classification périodique des éléments et les lanthanides,
X identiques ou différents, fluor, chlore, brome, iode, hydrogène, alkyle en C₁ à C₁₀, aryle en C₆ à C₁₅, alkylaryle ayant 1 à 10 atomes de carbone dans le reste alkyle et 6 à 20 atomes de carbone dans le reste aryle, -OR¹⁰ ou -NR¹⁰R¹¹,
n un nombre entier entre 1 et 4, tandis que n correspond à la valeur de M moins le nombre 2,
R¹, R⁸ identiques ou différents, hydrogène, fluor, chlore, brome, iode, alkyle en C₁ à C₂₀, cycloalkyle ayant 3 à 8 chaînons - qui à son tour peut porter un alkyle en C₁ à C₁₀ comme reste -, aryle en C₆ à C₁₅, alkylaryle ayant 1 à 10 atomes de carbone dans le reste alkyle et 6 à 20 atomes de carbone dans le reste aryle, arylalkyle ayant 1 à 10 atomes de carbone dans le reste akyle et 6 à 20 atomes de carbone dans le reste aryle, Si(R⁹)₃ ave R⁹, identiques ou différents, désignant un alkyle en C₁ à C₂₀, cycloalkyle en C₃ à C₁₀, aryle en C₆ à C₁₅,
tandis que les restes indiqués peuvent être partiellement ou totalement substitués par des hétéroatomes,
-OR²⁷, -SR²⁷, -N(R²⁷)₂, -P(R²⁷)₂, tandis que R²⁷, identiques ou différents, représentent un alkyle en C₁ à C₁₀, aryle en C₆ à C₁₅, cycloalkyle en C₃ à C₁₀, alkylaryle ou Si(R²⁸)₃,
tandis que R²⁸, identiques ou différents, désignent un alkyle en C₁ à C₁₀, aryle en C₆ à C₁₅, cycloalkyle en C₃ à C₁₀, alkylaryle,
R² à R⁷ identiques ou différents, hydrogène, alkyle en C₁ à C₂₀, cycloalkyle ayant 3 à 8 chaînons - qui à son tour peut porter un reste alkyle en C₁ à C₁₀ -, aryle en C₆ à C₁₅, alkylaryle ayant 1 à 10 atomes de carbone dans le reste alkyle et 6 à 20 atomes de carbone dans le reste aryle, arylalkyle ayant 1 à 10 atomes de carbone dans le reste alkyle et 6 à 20 atomes de carbone dans le reste aryle, Si(R⁹)₃, tandis que R⁹, identiques ou différents, représentent un alkyle en C₁ à C₂₀, cycloalkyle en C₃ à C₁₀, aryle en C₆ à C₁₅,
des restes R² à R⁷ voisins peuvent désigner des groupes cycliques saturés, partiellement saturés ou insaturés, présentant 4 à 15 atomes de carbone, et les restes indiqués peuvent être totalement ou partiellement substitués par des hétéroatomes, -OR²⁷, -SR²⁷, -N(R²⁷)₂, -P(R²⁷)₂,
tandis que R²⁷, identiques ou différents, représentent un alkyle en C₁ à C₁₀, aryle en C₆ à C₁₅, cycloalkyle en C₃ à C₁₀, alkylaryle ou Si(R²⁸)₃,
tandis que R²⁸, identiques ou différents, désignent un alkyle en C₁ à C₁₀, aryle en C₆ à C₁₅, cycloalkyle en C₃ à C₁₀, alkylaryle,
R¹⁰, R¹¹ un alkyle en C₁ à C₁₀, aryle en C₆ à C₁₅, alkylaryle, arylalkyle, fluoroalkyle ou fluoroaryle ayant à chaque fois 1 à 10 atomes de carbone dans le reste alkyle et 6 à 20 atomes de carbone dans le reste aryle,
Y, Y¹ identiques ou différents, 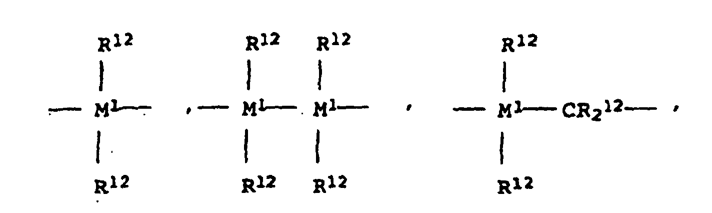 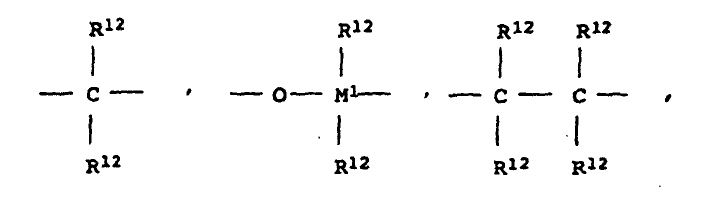 -B(R¹²)-, -Al(R¹²)-, -Ge-, -Sn-, -O-, -S-, -S(O)-, -S(O)₂-, -N(R¹²)-, -C(O)-, -P(R¹²)- ou -P(O)(R¹²)-,
tandis que
R¹² identiques ou différents, désignent l'hydrogène, un halogène, ou un alkyle en C₁-C₁₀, fluoroalkyle en C₁-C₁₀, fluoroaryle en C₆-C₁₀, aryle en C₆-C₁₀, alcoxy en C₁-C₁₀, alcényle en C₂-C₁₀, arylalkyle en C₇-C₄₀, arylalcényle en C₈-C₄₀, alkylaryle en C₇-C₄₀, ou tandis que deux restes R¹² forment un cycle avec les atomes les reliant,
M¹ est le silicium, le germanium ou l'étain, et
n vaut 0, 1, 2, 3,
ou Y n'est pas pontant et représente deux restes R' et R", tandis que
R' et R" sont identiques ou différents et désignent l'hydrogène, le fluor, le chlore, le brome, l'iode, un alkyle en C₁ à C₂₀, un cycloalkyle ayant 3 à 8 chaînons - qui peut à son tour porter un alkyle en C₁ à C₁₀ comme reste -, un aryle en C₆ à C₁₅, un alkylaryle ayant 1 à 10 atomes de carbone dans le reste alkyle et 6 à 20 atomes de carbone dans le reste aryle, arylalkyle ayant 1 à 10 atomes de carbone dans le reste alkyle et 6 à 20 atomes de carbone dans le reste aryle, Si(R⁹)₃,
tandis que R⁹, identiques ou différents, représentent un alkyle en C₁ à C₂₀, cycloalkyle e C₃ à C₁₀, un aryle en C₆ à C₁₅, ou conjointement avec des restes voisins R⁴ ou R⁵ désignent des groupes cycliques saturés, partiellement saturés ou insaturés ayant 4 à 15 atomes de carbone, et les restes mentionnés peuvent être partiellement ou totalement substitués par des hétéroatomes,
-OR²⁷, -SR²⁷, -N(R²⁷)₂, -P(R²⁷)₂,
tandis que R²⁷, identiques ou différents, représentent un alkyle en C₁ à C₁₀, aryle en C₆ à C₁₅, cycloalkyle en C₃ à C₁₀, alkylaryle ou Si(R²⁸)₃,
tandis que R²⁸, identiques ou différents, désignent un alkyle en C₁ à C₁₀, aryle en C₆ à C₁₅, cycloalkyle en C₃ à C₁₀, alkylaryle,
avec des dérivés de cyclopentadiényle de métaux alcalins ou alcalino-terreux, chauffage du mélange réactionnel ainsi obtenu à une température dans l'intervalle de -78 à 250°C, éventuellement avec addition de radicaux ou d'agents formant des radicaux et éventuellement substitution subséquente du ligand phénolique ponté ou des deux ligands phénoliques non-pontés pour former le produit de mono- ou bisubstitution.

2. Procédé selon la revendication 1, dans lequel R¹ et R⁸ dans la formule I sont des substituants volumineux.

3. Procédé selon les revendications 1 ou 2, dans lequel m dans la formule I vaut 0.

4. Procédé selon les revendications 1 à 3, dans lequel Y¹ sont identiques et désignent l'oxygène.

5. Procédé selon les revendications 1 à 4, dans lequel on utilise des dérivés de cyclopentadiényle du magnésium ou du lithium.

6. Procédé selon la revendication 1, dans lequel R¹, R³, R' et R⁶, R⁸, R" désignent 'hydrogène, et R², R⁴ et R⁵, R⁷ ont la signification indiquée dans la revendication 1, mais pas l'hydrogène.

7. Complexes de métallocène racémiques de formule générale III 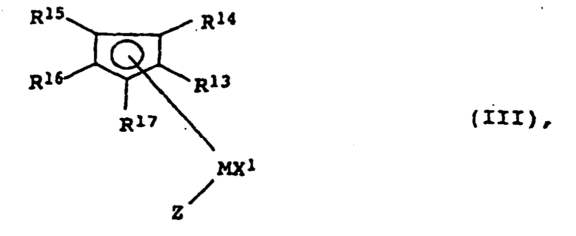 dans laquelle les substituants et les indices ont la signification suivante:
M titane, zirconium, hafnium, vanadium, niobium, tantale, chrome, molybdène, tungstène, ainsi que les éléments du sous-groupe III de la classification périodique des éléments et les lanthanides,
X¹ 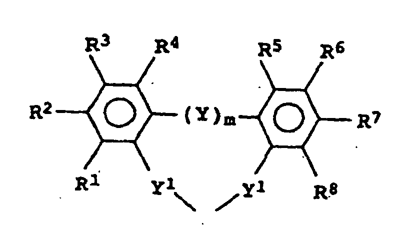
tandis que:
R¹, R⁸ identiques ou différents, hydrogène, fluor, chlore, brome, iode, alkyle en C₁ à C₂₀, cycloalkyle ayant 3 à 8 chaînons - qui à son tour peut porter un alkyle en C₁ à C₁₀ comme reste -, aryle en C₆ à C₁₅, alkylaryle ayant 1 à 10 atomes de carbone dans le reste alkyle et 6 à 20 atomes de carbone dans le reste aryle, arylalkyle ayant 1 à 10 atomes de carbone dans le reste alkyle et 6 à 20 atomes de carbone dans le reste aryle, Si(R⁹)₃ ave R⁹, identiques ou différents, désignant un alkyle en C₁ à C₂₀, cycloalkyle en C₃ à C₁₀, aryle en C₆ à C₁₅,
tandis que les restes indiqués peuvent être partiellement ou totalement substitués par des hétéroatomes,
-OR²⁷, -SR²⁷, -N(R²⁷)₂, -P(R²⁷)₂, tandis que R²⁷, identiques ou différents, représentent un alkyle en C₁ à C₁₀, aryle en C₆ à C₁₅, cycloalkyle en C₃ à C₁₀, alkylaryle ou Si(R²⁸)₃,
tandis que R²⁸, identiques ou différents, désignent un alkyle en C₁ à C₁₀, aryle en C₆ à C₁₅, cycloalkyle en C₃ à C₁₀, alkylaryle,
R² à R⁷ identiques ou différents, hydrogène, alkyle en C₁ à C₂₀, cycloalkyle ayant 3 à 8 chaînons - qui à son tour peut porter un reste alkyle en C₁ à C₁₀ -, aryle en C₆ à C₁₅, alkylaryle ayant 1 à 10 atomes de carbone dans le reste alkyle et 6 à 20 atomes de carbone dans le reste aryle, arylalkyle ayant 1 à 10 atomes de carbone dans le reste alkyle et 6 à 20 atomes de carbone dans le reste aryle, Si(R⁹)₃, tandis que R⁹, identiques ou différents, représentent un alkyle en C₁ à C₂₀, cycloalkyle en C₃ à C₁₀, aryle en C₆ à C₁₅,
des restes R² à R⁷ voisins peuvent désigner des groupes cycliques saturés, partiellement saturés ou insaturés, présentant 4 à 15 atomes de carbone, et les restes indiqués peuvent être totalement ou partiellement substitués par des hétéroatomes,
-OR²⁷, -SR²⁷, -N(R²⁷)₂, -P(R²⁷)₂,
tandis que R²⁷, identiques ou différents, représentent un alkyle en C₁ à C₁₀, aryle en C₆ à C₁₅, cycloalkyle en C₃ à C₁₀, alkylaryle ou Si(R²⁸)₃,
tandis que R²⁸, identiques ou différents, désignent un alkyle en C₁ à C₁₀, aryle en C₆ à C₁₅, cycloalkyle en C₃ à C₁₀, alkylaryle,
Y, Y¹ identiques ou différents, 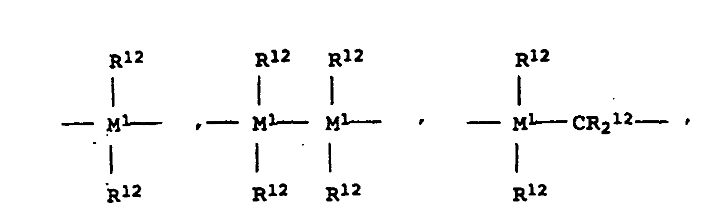 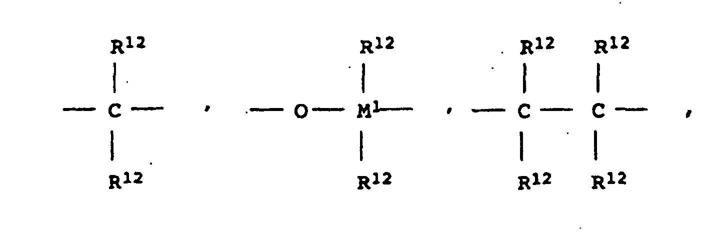 -B(R¹²)-, -Al(R¹²)-, -Ge-, -Sn-, -O-, -S-, -S(O)-, -S(O)₂-, -N(R¹²)-, -C(O)-, -P(R¹²)- ou -P(O)(R¹²)-,
tandis que
R¹² identiques ou différents, désignent l'hydrogène, un halogène, ou un alkyle en C₁-C₁₀, fluoroalkyle en C₁-C₁₀, fluoroaryle en C₆-C₁₀, aryle en C₆-C₁₀, alcoxy en C₁-C₁₀, alcényle en C₂-C₁₀, arylalkyle en C₇-C₄₀, arylalcényle en C₈-C₄₀, alkylaryle en C₇-C₄₀, ou tandis que deux restes R¹² forment un cycle avec les atomes les reliant,
M¹ est le silicium, le germanium ou l'étain, et
m vaut 0, 1, 2, 3,
ou Y n'est pas pontant et représente deux restes R' et R", tandis que
R' et R" sont identiques ou différents et désignent l'hydrogène, le fluor, le chlore, le brome, l'iode, un alkyle en C₁ à C₂₀, un cycloalkyle ayant 3 à 8 chaînons - qui peut à son tour porter un alkyle en C₁ à C₁₀ comme reste -, un aryle en C₆ à C₁₅, un alkylaryle ayant 1 à 10 atomes de carbone dans le reste alkyle et 6 à 20 atomes de carbone dans le reste aryle, arylalkyle ayant 1 à 10 atomes de carbone dans le reste alkyle et 6 à 20 atomes de carbone dans le reste aryle, Si(R⁹à3,
tandis que R⁹, identiques ou différents, représentent un alkyle en C₁ à C₂₀, cycloalkyle e C₃ à C₁₀, un aryle en C₆ à C₁₅, ou conjointement avec des restes voisins R⁴ ou R⁵ désignent des groupes cycliques saturés, partiellement saturés ou insaturés ayant 4 à 15 atomes de carbone, et les restes mentionnés peuvent être partiellement ou totalement substitués par des hétéroatomes,
-OR²⁷, -SR²⁷, -N(R²⁷)₂, -P(R²⁷)₂,
tandis que R²⁷, identiques ou différents, représentent un alkyle en C₁ à C₁₀, aryle en C₆ à C₁₅, cycloalkyle en C₃ à C₁₀, alkylaryle ou Si(R²⁸)₃,
tandis que R²⁸, identiques ou différents, désignent un alkyle en C₁ à C₁₀, aryle en C₆ à C₁₅, cycloalkyle en C₃ à C₁₀, alkylaryle,
R¹³ à R¹⁷ identiques ou différents, désignent l'hydrogène ou un alkyle en C₁ à C₂₀, un cycloalkyle ayant 5 à 7 chaînons - qui peut à son tour porter un alkyle en C₁ à C₁₀ comme substituant -, un aryle en C₆ à C₁₅ ou un arylalkyle, tandis que des restes voisins peuvent représenter conjointement des groupes cycliques présentent 4 à 15 atomes e carbone, ou Si(R¹⁸)₃ avec
R¹⁸ identiques ou différents, désignant un alkyle en C₁ à C₁₀, un aryle en C₆ à C₁₅ ou un cycloalkyle en C₃ à C₁₀,
Z représente 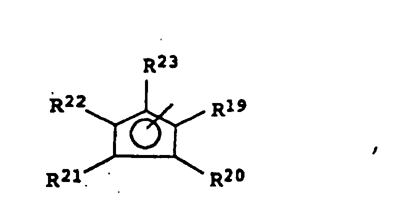
tandis que les restes
R¹⁹ à R²³ identiques ou différents, désignent l'hydrogène, un alkyle en C₁ à C₂₀, un cycloalkyle ayant 5 à 7 chaînons, - qui peut à son tour porter un alkyle en C₁ à C₁₀ comme substituant -, un aryle en C₆ à C₁₅ ou un arylalkyle, tandis que des restes voisins peuvent désigner conjointement des groupes cycliques présentant 4 à 15 atomes de carbone, ou Si(R²⁴)₃, tandis que
R²⁴ identiques différents, représentent un alkyle en C₁ à C₁₀, un aryle en C₆ à C₁₅ ou un cycloalkyle en C₃ à C₁₀,
ou tandis que les restes
R¹⁶ et Z forment ensemble un groupement -[T(R²⁵)(R²⁶)]_{q}-E-, dans lequel
T peuvent être identiques ou différents, et désignent le silicium, le germanium, l'étain ou le carbone,
R²⁵, R²⁶ représentent l'hydrogène, un alkyle en C₁ à C₁₀, un cycloalkyle en C₃ à C₁₀ ou un aryle en C₆ à C₁₅,
q désigne les nombres 1, 2, 3 ou 4,
E représente 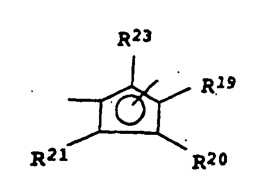 ou A,
tandis que A désigne -O-, -S-, 〉NR²⁷ ou 〉PR²⁷
avec R²⁷ identiques ou différents, alkyle en C₁ à C₁₀, aryle en C₆ à C₁₅, cycloalkyle en C₃ à C₁₀, alkylaryle ou Si(R²⁸)₃
avec R²⁸ identiques ou différents, alkyle en C₁ à C₁₀, aryle en C₆ à C₁₅, cycloalkyle en C₃ à C₁₀ ou alkylaryle.

8. Complexes de métallocène racémiques selon la revendication 7, dans lesquels R¹⁷ et R²³ ne désignent pas l'hydrogène, quand R¹⁶ et Z forment ensemble un groupement -[T(R²⁵)(R²⁶)]_{q}-E-.

9. Complexes de métallocène racémiques pouvant être obtenus par le procédé selon la revendication 6.

10. rac-Me₂Si(2-Me-benzo[e]ind)₂Zr(3,5-Me₂-OC₆H₃)₂.

11. Utilisation de complexes de métallocène racémiques selon les revendications 7 à 10 comme catalyseurs ou comme composant de catalyseurs pour la polymérisation de composés à insaturation oléfinique ou comme réactifs ou catalyseurs en synthèse stéréosélective.
